# EUROPEAN PATENT APPLICATION

(11) **EP 2 275 800 A2**
(43) Date of publication of application: **19.01.2011**
(21) Application number: 10169414.9
(22) Date of filing: 13.07.2010
(51) Int. Cl.: G01N 17/02

(54) **Corrosion detecting apparatus and outdoor structure**

(30) Priority: 14.07.2009 JP 2009166033; 15.07.2009 JP 2009166943; 31.07.2009 JP 2009179860
(71) Applicant: Mitsubishi Heavy Industries, Ltd., Tokyo 108-8215 (JP)
(72) Inventor: Dobashi, Shinsaku, TOKYO 108-8215 (JP); Tsukahara, Chisato, TOKYO 108-8215 (JP); Takeda, Kazuhiro, TOKYO 108-8215 (JP); Okano, Yasushi, TOKYO 108-8215 (JP); Notomi, Ryosuke, TOKYO 108-8215 (JP)
(74) Representative: Intès, Didier Gérard André

(57) **Abstract**

A corrosion detecting apparatus includes a first conductive part 11, an insulating film part 12 made of a material same as that applied to an outdoor structure, which covers the first conductive part 11, and linear second conductive parts 13 provided in plural with a predetermined gap therebetween on top of the film part 12, to detect a corrosion current generated due to degradation of the film part. The corrosion current is detected by a water film generated by a crack formed due to degradation of the film part 12.

## Description

### Technical Field

The present invention relates to a corrosion detecting apparatus that can detect corrosion of an outdoor structure due to salt damage or the like in advance, and to an outdoor structure including the corrosion detecting apparatus.

### [Background Art]

For example, because an outdoor structure such as a windmill is installed on a sea or coast, it is concerned that an exterior coated film of the windmill, a transformer provided inside the windmill, a control board and the like corrode due to salt damage.
Therefore, salt damage prediction according to an inside material and a coated film of the apparatus has been required.

As an evaluation method thereof, JIS Z2371 "neutral salt spray test" and JIS K5621 "combined cyclic corrosion test" have been established (Non Patent Literatures 1 and 2).

Further, a corrosion sensor has been recently proposed as a sensor that predicts an amount of salt corrosion (Patent Literature 1).

To explain the corrosion sensor, when two dissimilar metals (a base material and a conductive part) are put in an insulated state by an insulating unit, and ends thereof are exposed to the environment, a water film connects the both metals with each other according to the environment, and thus a corrosion current flows. Because this current corresponds to a corrosion speed of a base metal, it is used as a corrosion sensor.

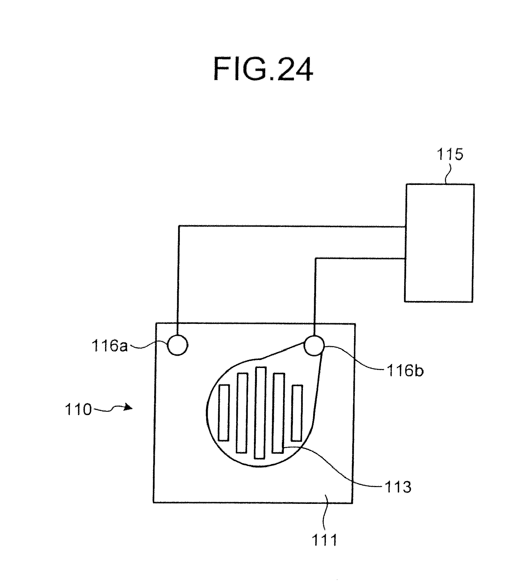

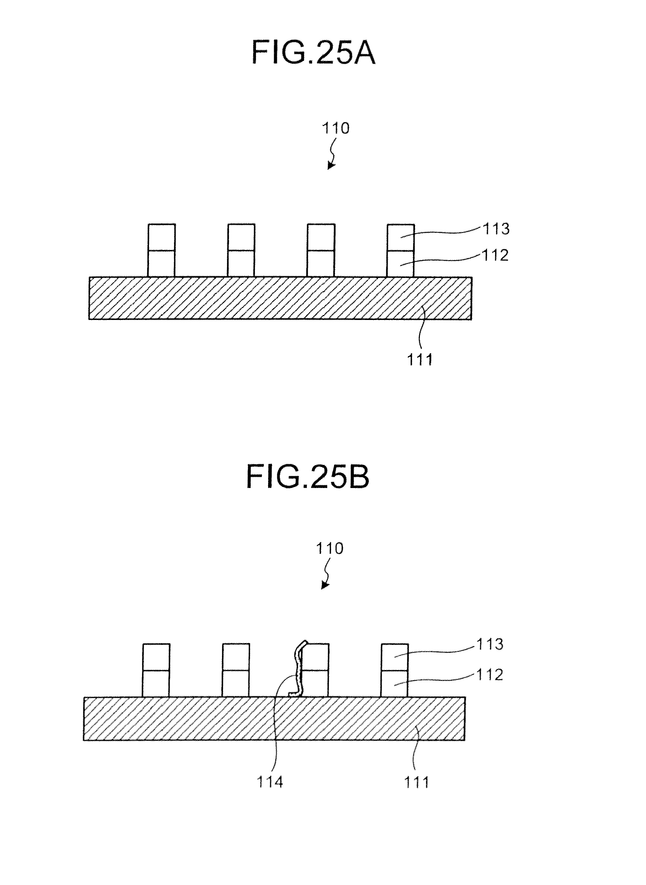

This corrosion sensor is referred to as "atmospheric corrosion monitor" or an ACM corrosion sensor (hereinafter, also "corrosion sensor").
An example of the corrosion sensor is shown in Figs. 24, 25A and 25B. As shown in Figs. 24 and 25A, an ACM corrosion sensor (hereinafter, "corrosion sensor") 110 has a base material 111 obtained by cutting a carbon steel sheet having a thickness of 0.8 millimeter in a size of 64×64 millimeters, and an insulating unit 112 of an insulation paste (with a thickness of 30 to 35 micrometers) is applied and cured on the base material 111 by using a precision screen printer for a thick film IC.
Subsequently, a conductive paste (with a thickness of 30 to 40 micrometers, filler: Ag) is laminated and printed on a pattern of the insulating unit 112 and cured so that the insulation with the base material 111 is maintained, so as to obtain a conductive part 113, and thus a corrosion sensor (Non Patent Literature 3) is constituted.
As shown in Fig. 24, the base material 111 is used as a first conductive part and a plurality of conductive parts 113 provided with a predetermined gap therebetween are used as linear second conductive parts.

As shown in Fig. 25B, the conductive parts 113 and the base material 111 are short-circuited by a water film 114 such as moisture or sea salt (chloride ion or the like), and a corrosion current of a Fe-Ag galvanic pair resulting therefrom is measured by an ammeter 115. In Fig. 24, reference characters 116a and 116b denote terminals.

Further, there has been proposed a method of predicting an amount of salt corrosion of a member of a solar photovoltaic system using an ACM corrosion sensor, where an amount of adhered sea salt is estimated based on a relationship diagram between humidity and a current measurement and between humidity and the amount of adhered sea salt (Non Patent Literatures 4 and 5).

### [Citation List]

### [Patent Literature]

[Patent Literature 1] Japanese Patent Application Laid-open No. 2008-157647
Non Patent Literature

[Non Patent Literature 1] JIS Z2371
[Non Patent Literature 2] JIS Z5621
[Non Patent Literature 3]
http://www.nims.go.jp/mdss/corrosion/ACM/ACM1.htm
[Non Patent Literature 4] Matsushita Technical Journal (Nov. 2002) p79-85
[Non Patent Literature 5] Material and Environment "Evaluation of Corrosivity of Atmosphere by ACM Type Corrosion Sensor" 54, 375-8 (2005)

### [Summary of Invention]

### [Technical Problem]

However, in JIS Z2371 Standard and JIS K5621 standard test, because a testing environment does not match with an actual environment, the testing accuracy is poor.

There is another problem such that although a degree of corrosion can be estimated based on a corrosion current by using an ACM corrosion sensor, because coating is applied to almost all materials of respective components constituting an outdoor construct, the degree of corrosion corresponding to a condition of a coated film of individual coating (such as the type and thickness of a coated film) cannot be appropriately determined.

Further, in an installation site of an outdoor structure, because the direction of wind changes according to the season or time, the cause of degradation of the coated film is different according to the installation site (a region) of the outdoor structure. Specific degradation factors include ultraviolet irradiation, continuation of wet time, and adhesion of sea salt, and it is desired that maintenance of the coated film, members, and parts of the outdoor structure is performed properly according to the corrosive environment thereof.

In view of the above problems, an object of the present invention is to provide a corrosion detecting apparatus that can prevent salt damage beforehand, while monitoring a chronological change of salt damage at all times, and an outdoor structure including the same.

For example, in an installation site of the corrosion sensor for measuring the corrosive environment of the outdoor structure, because there are various environments, the degree of corrosion of the corrosion sensor is not uniform, and a degradation degree can be different.
When degradation proceeds, the base material 111 may lift the insulating unit 112 and the conductive part 113. In such a case, because the corrosion current does not flow, the corrosion sensor cannot function.
That is, in an environment in which atmospheric corrosion is accelerated, degradation of the conductive part 113 formed of a silver conductive paste on a surface of the corrosion sensor proceeds in several months (the color thereof changes from silver to brown with acceleration of degradation). Therefore, the degradation degree of the corrosion detecting apparatus according to the environment needs to be ascertained properly, and the sensor needs to be replaced before it becomes unable to function as a sensor.
Conventionally, to perform this determination, human visual judgment on a regular basis has been required, thereby requiring a huge amount of time and labor.
Therefore, it has been desired to reduce the judgment of the sensor function and the labor for replacement.

In view of the above problems, an object of the present invention to provide a corrosive-environment monitoring apparatus and a corrosive-environment monitoring method that can determine replacement of a sensor before it becomes unable to function, while monitoring a degradation degree of a corrosion sensor.

There is another problem such that although the degree of corrosion can be estimated based on a corrosion current by using an ACM corrosion sensor, because coating is applied to almost all materials of respective components constituting an outdoor construct, the degree of corrosion corresponding to a condition of a coated film of individual coating (such as the type and thickness of a coated film) cannot be appropriately determined.

Further, in an installation site of an outdoor structure, because the direction of wind changes according to the season or time, the cause of degradation of the coated film is different according to the installation site (a region) of the outdoor structure. Specific degradation factors include ultraviolet irradiation, continuation of wet time, and adhesion of sea salt, and it is desired that maintenance of the coated film, members, and parts of the outdoor structure is performed properly according to the corrosive environment thereof.

In view of the above problems, an object of the present invention is to provide a corrosion detecting apparatus that can properly perform maintenance of a coated film, members, and parts of an outdoor structure according to the corrosive environment, while specifying degradation factors of the coated film for each installation site (a region), thereby preventing salt damage beforehand, an outdoor structure, and a corrosion protection method of the outdoor structure.

### [Solution to Problem]

According to an aspect of the present invention, a corrosion detecting apparatus includes: a first conductive part provided on an exterior surface of an outdoor structure; an insulating film part made of a material same as that applied to the outdoor structure, which covers the first conductive part; and second conductive parts provided on a coated film of the film part with a predetermined gap therebetween. The corrosion detecting apparatus detects a corrosion current generated due to degradation of the film part.

Advantageously, in the corrosion detecting apparatus, the film part is thinner than a coated film applied to an outdoor structure.

According to another aspect of the present invention, an outdoor structure provided with the corrosion detecting apparatus on a coated surface of an outdoor structure.

According to still another aspect of the present invention, in an outdoor structure, the corrosion detecting apparatus is provided on a coated surface of an outdoor structure, and a plurality of corrosion detecting apparatuses having a thickness of the film part different from each other are provided.

According to still another aspect of the present invention, in an outdoor structure, the corrosion detecting apparatus is provided on a coated surface of an outdoor structure, and any one of an actinometer, a hygrometer, and a PH meter is provided near the corrosion detecting apparatus.

According to still another aspect of the present invention, an outdoor structure includes: a base material of an outdoor structure used as a first conductive part; a coated film of an outdoor structure that covers the base material; and second conductive parts provided with a predetermined gap therebetween on top of the coated film.
A corrosion current is detected by degradation of the coated film.

According to still another aspect of the present invention, an outdoor structure includes: a base material of an outdoor structure; a first conductive part provided on the base material via an insulating unit; a coated film of an outdoor structure that covers the base material; and second conductive parts provided with a predetermined gap therebetween on top of the coated film. A corrosion current is detected by degradation of the coated film.

According to still another aspect of the present invention, a corrosive-environment monitoring apparatus includes: a corrosion sensor that monitors a corrosive environment; a degradation degree analyzer that measures a degradation degree of a corrosion sensor during monitoring; a plurality of storage containers that individually store an unused corrosion sensor in an inert atmosphere; and a controller that releases the storage container to control switching so that a corrosive environment is newly measured by the unused corrosion sensor, according to a determination result of degradation degree by the degradation degree analyzer.

Advantageously, in the corrosive-environment monitoring apparatus, detection information of a detection area on a surface of the corrosion sensor is divided in plural according to analysis by the degradation degree analyzer, a degradation degree is determined for each divided areas, and when it is determined that a predetermined degradation degree has been reached, the controller performs switching so that measurement is newly performed by the unused corrosion sensor.

According to still another aspect of the present invention, a corrosive-environment monitoring apparatus includes: a corrosion sensor part including a corrosion sensor during monitoring that is monitoring corrosive environments at a plurality of locations individually, and an unused corrosion sensor stored in a storage container; an imaging unit installed individually facing a corrosion sensor during monitoring in the corrosion sensor part to transmit image information to a degradation degree analyzer that measures a degradation degree on a surface of the corrosion sensor; an electronic transmitting unit that transmits respective pieces of imaging information to the degradation degree analyzer; a degradation degree analyzer that determines a degradation degree of respective pieces of imaging information; a controller that individually releases the storage container at a plurality of locations to control switching so that the corrosive environment is measured by the unused corrosion sensor, according to a determination result by the degradation degree analyzer; and a shift controller that individually shifts the imaging unit to capture images of a corrosion sensor that newly performs measurement due to switching by the controller.

Advantageously, in the corrosive-environment monitoring apparatus, the degradation degree analyzer is a color analyzer having color sensors of R (red), G (green), and B (blue), which determines that the corrosion sensor is degraded when a measurement result of RBG comes close to a color value of brown (R:, G:, B).

According to still another aspect of the present invention, a corrosive-environment monitoring method includes: measuring a degradation degree of a corrosion sensor during monitoring of a corrosive environment by a degradation degree analyzer; and releasing a storage container in which an unused corrosion sensor is stored according to a determination result of the degradation degree by the degradation degree analyzer, to newly measure a corrosive environment by the unused corrosion sensor.

According to still another aspect of the present invention, a corrosion detecting apparatus includes: a polyhedral supporting unit having at least four substantially vertical planes; a corrosion sensor respectively provided on the substantially vertical planes of the polyhedral supporting unit; and a holding unit that holds the polyhedral supporting unit provided with the corrosion sensor, while maintaining the polyhedral supporting unit in a predetermined orientation with respect to an outdoor structure.

Advantageously, in the corrosion detecting apparatus, the corrosion sensor includes a first conductive part as a base material, insulating units provided on top of the first conductive part with a predetermined gap therebetween, and second conductive parts provided on top of the insulating units, so that a corrosion current is detected by an adhered salt content.

Advantageously, in the corrosion detecting apparatus, a coated-film corrosion detector is provided at a same installation site as or a different installation site from that of the corrosion sensor, and the coated-film corrosion detector comprises: a first conductive part provided on an exterior surface of an outdoor structure, an insulating film part made of a material same as that applied to the outdoor structure, which covers the first conductive part, and second conductive parts provided on a coated film of the film part with a predetermined gap therebetween, so as to detect a corrosion current generated due to degradation of the film part.

According to still another aspect of the present invention, an outdoor structure provided with the corrosion detecting apparatus above described.

According to still another aspect of the present invention, an outdoor structure provided with the corrosion detecting apparatus above described. Any one of an actinometer, a hygrometer, and a PH meter is provided near the corrosion detecting apparatus.

According to still another aspect of the present invention, a corrosion protection method of an outdoor structure, includes: holding the corrosion detecting apparatus according to any one of claims 13 to 15, while maintaining the corrosion detecting apparatus in a predetermined orientation with respect to an outdoor structure; determining an amount of adhered sea salt until reaching corrosion by the corrosion detecting apparatus; and performing cleansing or drying of an outdoor structure according to a degraded condition corresponding to an orientation.

### Advantageous Effects of Invention

According to the present invention, a degraded condition of a coated film can be quickly determined regarding the chronological change due to corrosive factors such as sea salt and rain water. Accordingly, some measures for suppressing degradation can be taken quickly.

According to the present invention, it is monitored whether the corrosion sensor that measures the corrosive environment is substantially in a new state at all times, and when it is determined that replacement is required, the corrosion sensor is replaced by a new sensor to measure the corrosive environment continuously, thereby enabling to maintain a state in which the function of the corrosion sensor is always ensured. Accordingly, performance management of the corrosion sensor according to various corrosive environments can be performed appropriately.

According to the present invention, the degradation degree can be quickly determined while taking the orientation of a structure into consideration, with regard to the chronological change due to corrosive factors such as sea salt and rain water. Accordingly, some measures for suppressing degradation can be taken quickly.

### [Brief Description of Drawings]

Fig. 1 is a schematic diagram of a corrosion detecting apparatus according to a first embodiment of the present invention;
Fig. 2A is a schematic diagram of usage the corrosion detecting apparatus according to the first embodiment;
Fig. 2B is a schematic diagram of usage the corrosion detecting apparatus according to the first embodiment;
Fig. 2C is a schematic diagram of usage the corrosion detecting apparatus according to the first embodiment;
Fig. 3 is a side view of a case when the corrosion detecting apparatus is installed in a wind power station as an example of an outdoor structure;
Fig. 4 is a side view of a case when a corrosion detecting apparatus, an ACM corrosion sensor, and a hygrometer are installed in a wind power station as an example of an outdoor structure according to a second embodiment of the present invention;
Fig. 5 depicts a relation between relative humidity and a corrosion current value;
Fig. 6A is a chart of an example of measurement of the ACM corrosion sensor;
Fig. 6B is a schematic chart of an example of measurement of the corrosion detecting apparatus;
Fig. 7 is a schematic diagram of a corrosion detecting apparatus according to a third embodiment of the present invention;
Fig. 8 is a schematic diagram of another corrosion detecting apparatus according to the third embodiment;
Fig. 9 is a schematic diagram of a corrosive-environment monitoring apparatus according to a fourth embodiment of the present invention;
Fig. 10 is a schematic diagram of an arrangement state of a corrosion sensor during monitoring and a corrosion sensor during storing nitrogen;
Fig. 11 is a schematic diagram of a corrosive-environment monitoring apparatus according to a fifth embodiment of the present invention;
Fig. 12 is a side view of a wind power station as an example of an outdoor structure;
Fig. 13 is a schematic diagram of a corrosion detecting apparatus according to a sixth embodiment of the present invention;
Fig. 14 is a perspective view of the corrosion detecting apparatus according to the sixth embodiment;
Fig. 15 is a side view of a case when a corrosion detecting apparatus is installed in a wind power station as an example of an outdoor structure according to a seventh embodiment of the present invention;
Fig. 16 is a plan view of Fig. 15;
Fig. 17 is a schematic diagram of another corrosion detecting apparatus according to the seventh embodiment;
Fig. 18 is a side view of a case when a corrosion detecting apparatus is installed in a wind power station as an example of an outdoor structure according to a ninth embodiment of the present invention;
Fig. 19 is a schematic diagram of a corrosion detecting apparatus according to a tenth embodiment of the present invention;
Fig. 20 is a flowchart of a first mode;
Fig. 21 is a flowchart of a modified example of the first mode;
Fig. 22 is a flowchart of a second mode;
Fig. 23 is a flowchart of a modified example of the second mode;
Fig. 24 is a plan view of a corrosion sensor according to a conventional technique;
Fig. 25A is a schematic diagram of a corrosion sensor according to a conventional technique; and
Fig. 25B is a schematic diagram of corrosion in a conventional technique.

### [Description of Embodiments]

The present invention will be explained below in detail with reference to the accompanying drawings. The present invention is not limited to the following embodiments. In addition, constituent elements in the embodiments include those that can be easily assumed by those skilled in the art or that are substantially equivalent.

### [First embodiment]

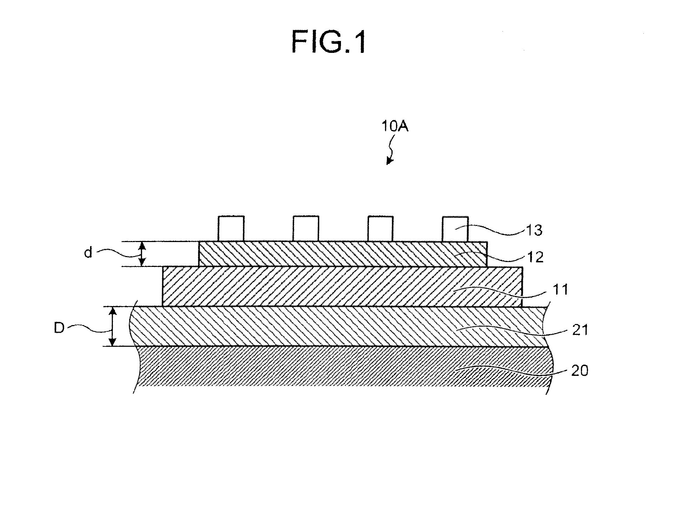

A corrosion detecting apparatus of a coated film according to a first embodiment of the present invention is explained with reference to the drawings. Fig. 1 is a schematic diagram of the corrosion detecting apparatus according to the first embodiment.

As shown in Fig. 1, a corrosion detecting apparatus 10A of a coated film according to the first embodiment has a first conductive part 11 provided on an upper face of a coated film 21, which is an exterior surface of an outdoor structure as a detection target, an insulating film part 12 made of a material same as that applied to the outdoor structure, which covers the first conductive part 11, and linear second conductive parts 13 provided in plural with a predetermined gap therebetween on a coated film of the film part 12, to detect a corrosion current generated due to degradation of the film part 12. For example, a crack same as a crack generated due to degradation of the coated film 21 of the outdoor structure due to a chronological change is generated in the film part 12 of the corrosion detecting apparatus 10A, and a corrosion current is detected by a water film generated by the crack. The second conductive parts 13 are provided in plural with a predetermined gap therebetween, as in the ACM corrosion sensor shown in Fig. 24, to constitute a linear conductive part.

The film part 12 constituting the sensor is obtained by applying a coating material same as that of the coated film 21 to be applied to a base material 20 of the outdoor structure. A film thickness of the film part 12 is set thinner than the coated film applied to the outdoor structure (a thickness (D) of the coated film 21> thickness (d) of the film part 12).
The thickness is preferably such that the thickness (d) of the film part 12 is about 1/3 to 4/5 of the thickness (D) of the coated film 21.
Generally, the film part includes an underlayer, an intermediate layer, and an overcoat layer, and the overcoat layer has a role to exert weather resistance. Therefore, the thickness (d) of the film part 12 can be about 1/3 to 4/5 of the film thickness of the overcoat layer.

Further, progress of degradation can be determined by changing the thickness. A plurality of corrosion detecting apparatuses 10A having a different thickness of the film part 12 can be provided at one portion of the coated film 21 of the outdoor structure, to determine corrosion degree by the thickness.

As a material forming the first conductive part 11, for example, aluminum (Al), iron (Fe), zinc (Zn), or stainless steel can be preferably used. For example, as a material forming the second conductive part 13, gold (Au), platinum (Pt), silver (Ag), or a carbon material such as graphite can be preferably used.
The same configuration as that of the conventional ACM corrosion sensor is used for parts other than the film part 12, where the thickness of the first conductive part 11 is, for example, about 0.8 millimeter, and a conductive (Ag) paste is used for the second conductive part 13, in a film thickness of, for example, 30 to 40 micrometers.

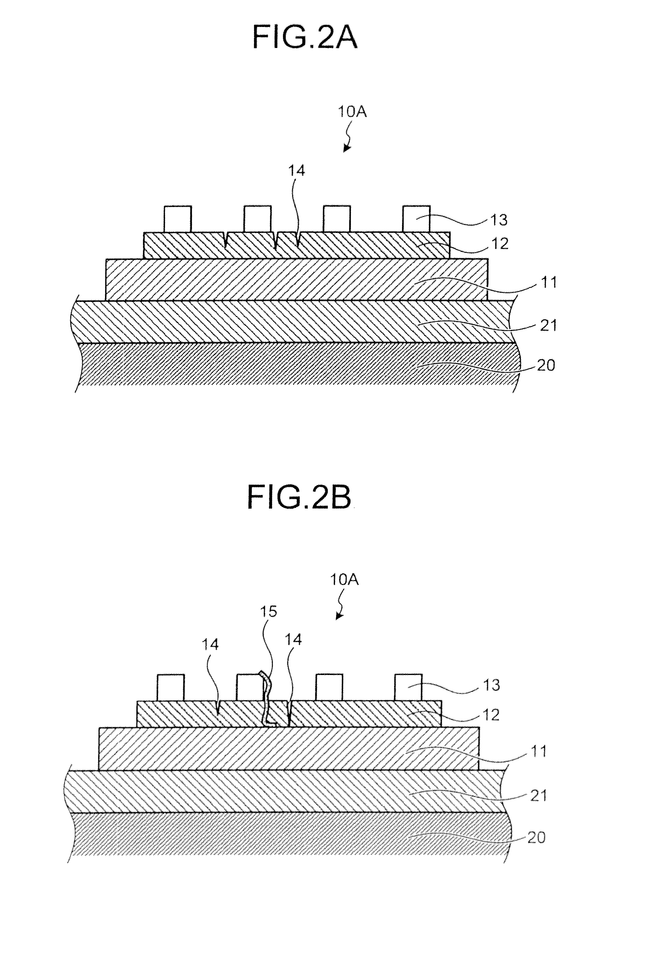

Figs. 2A to 2C are schematic diagrams of usage of corrosion detection using the corrosion detecting apparatus 10A according to the first embodiment.
As shown in Figs. 2A to 2B, in the corrosion detecting apparatus 10A according to the first embodiment, the linear second conductive parts 13 provided in plural with a predetermined gap therebetween are formed on an upper face of the film part 12 provided on top of the first conductive part 11, and a crack 14 is generated according to degradation of the film part 12 (see Fig. 2A). The second conductive part 13 and the first conductive part 11 are short-circuited due to a water film 15 generated according to extension of the crack 14, and a generated corrosion current is detected (see Fig. 2B).

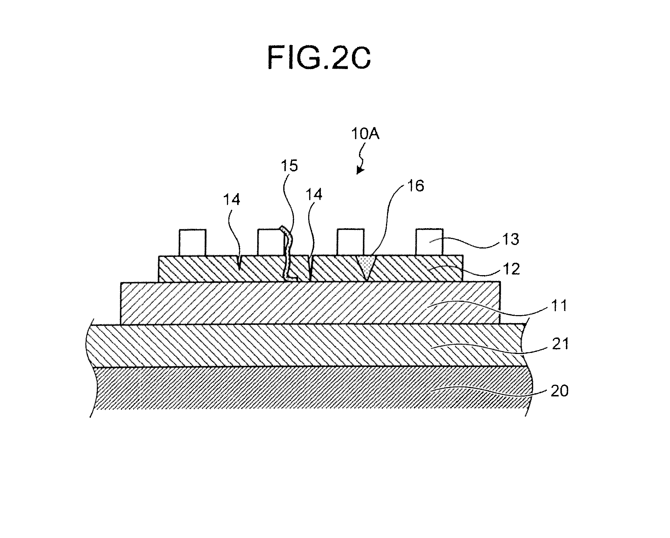

Also in a case that a clear crack 14 is not generated as shown in Fig. 2B, a water permeable part 16 is formed due to penetration of water with respect to the film part 12 due to time degradation of the film part 12, to short-circuit the second conductive part 13 and the first conductive part 11, and a corrosion current generated by the short circuit can be detected (see Fig. 2C).

Accordingly, progress of degradation of the coated film made of a material same as that of the actual coated film of the outdoor structure can be confirmed.

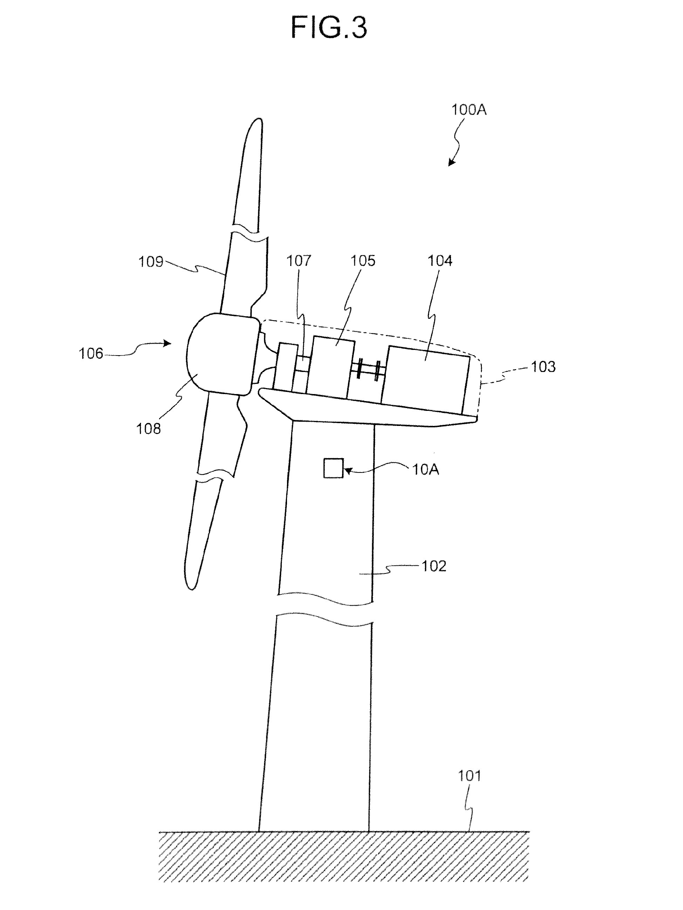

Fig. 3 is a side view of a case when the corrosion detecting apparatus is installed in a wind power stationas an example of the outdoor structure.
A wind power station 100A shown in Fig. 3 is explained.
As shown in Fig. 3, the wind power station 100A includes a tower 102 installed, for example, on a ground 101, and a nacelle 103 provided at an upper end of the tower 102. The nacelle 103 is turnable in a yaw direction, and can be directed toward a desired direction by a nacelle turning mechanism (not shown). A power generator 104 and a speed-up gear 105 are mounted on the nacelle 103. A rotor of the power generator 104 is bonded to a main spindle 107 of a wind turbine rotor 106 via the speed-up gear 105. The wind turbine rotor 106 includes a hub 108 connected to the main spindle 107 and vanes 109 fitted to the hub 108.
In the first embodiment, as shown in Fig. 3, the corrosion detecting apparatus 10A is provided at a side of the tower 102 of a wind power station 100, which is an outdoor structure.

According to the present invention, the degradation degree of the coated film can be quickly determined. Accordingly, some measures corresponding to the degradation degree (for example, cleansing, drying, recoating or the like) can be taken quickly.

According to the present invention, in the ACM corrosion sensor 110 according to a conventional art as shown in Figs. 24, 25A, and 25B, the film part made of a material same as that of the coated film applied to the outdoor structure is used as an insulating unit to constitute the corrosion detecting apparatus that monitors degradation such as a crack. Therefore, after the outdoor structure is completed, the corrosion detecting apparatus 10A needs only to be installed at an arbitrary location, and the degree of corrosion can be confirmed according to a degraded condition of the film part 12, which is the insulating unit.
Further, the thickness of the film part 12 can be arbitrarily set, and confirmation of the degraded condition can be ascertained beforehand.

On the other hand, when the existing ACM corrosion sensor 110 is used to confirm a crack in the coated film, for example, it is required that the entire existing ACM corrosion sensor 110 is covered so that there is no leakage, and a coated film applied to the outdoor structure is applied to over the surface of the outdoor structure. Therefore, an operation process to install the existing ACM corrosion sensor 110 after the outdoor structure is completed, and apply the coated film thereto to cover the whole surface thereof is required separately, thereby increasing the operation process and labor.

Further, a pH meter can be installed near the corrosion detecting apparatus 10A, and an acid rain countermeasure can be taken according to a pH value.
That is, in a neutral pH range in which the pH of the pH meter is 7, chlorine ion (Cl⁻) is a main body. However, when the pH is 7 or less, sulfate ion (SO₄⁻) is mixed with the main chlorine ion (Cl⁻). When the pH is 5.8 or less, the main body becomes the sulfate ion (SO₄⁻) rather than the chlorine ion (Cl⁻), and the acid rain countermeasure is required.
As the acid rain countermeasure, a coated film needs to be formed as the acid rain countermeasure at the time of next application of the coated film, in addition to careful cleansing or the like at the time of cleansing of an exterior coated film.

An actinometer can be installed near the corrosion detecting apparatus 10A to take some measures corresponding to an amount of insolation by sunlight.
Further, because ultraviolet light among the sunlight largely affects degradation of the coated film, a spectral actinometer that can obtain an amount of ultraviolet light, disperse the sunlight, and measure light of a specific wavelength can be used as the actinometer.

In addition, exposure to rain or solar insolation can be taken into consideration. As a result, an influence of rain can be measured by a measurement of the exposure to rain, and an influence of solar insolation can be measured by a measurement of the solar insolation.

### [Second embodiment]

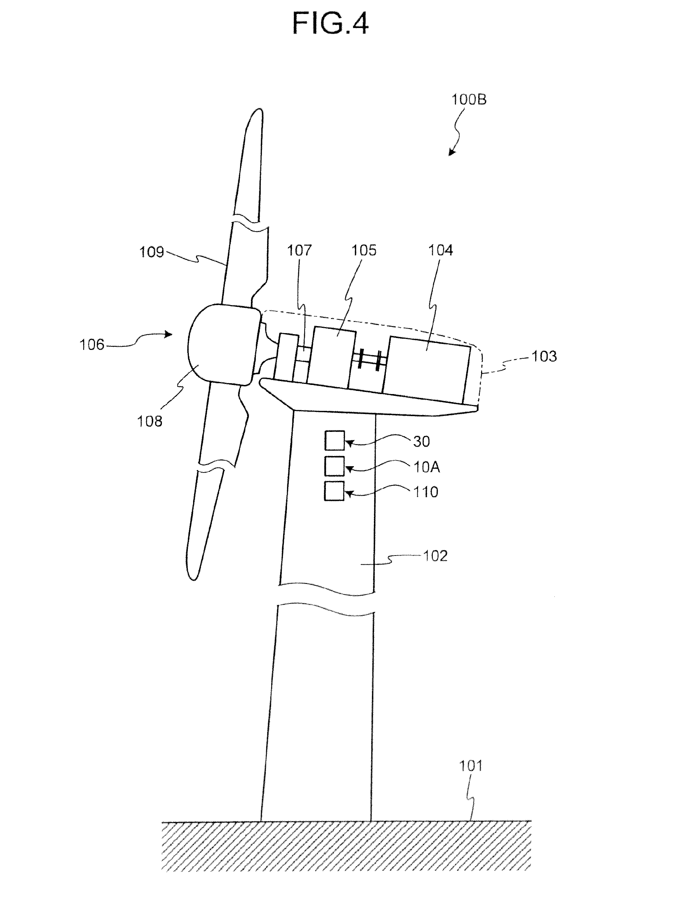

An outdoor structure including a corrosion detecting apparatus of a coated film according to a second embodiment of the present invention is explained with reference to the drawings. Fig. 4 is a schematic diagram of a wind power station as an example of the outdoor structure including the corrosion detecting apparatus according to the second embodiment.
In a wind power station 100B in the second embodiment, an ACM corrosion sensor 110 and a hygrometer 30 are installed near the corrosion detecting apparatus 10A, to measure an amount of adhered sea salt according to a moisture content thereof.

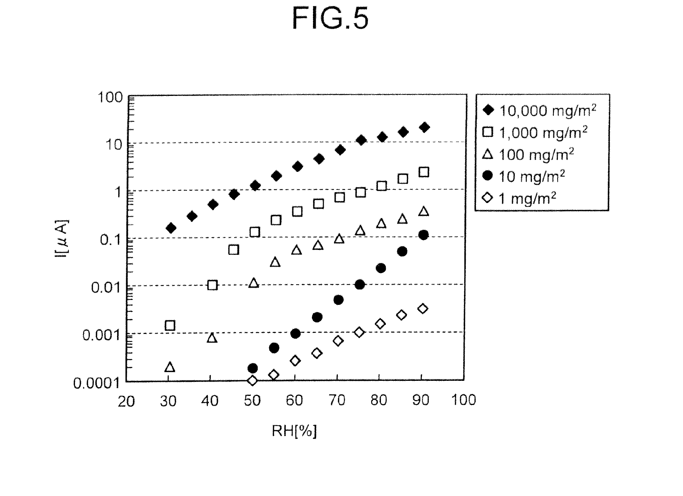

Fig. 5 depicts a relation between relative humidity and a corrosion current value. Fig. 5 is a relationship diagram between a sensor output (current value: I₁) of the ACM corrosion sensor 110 and humidity in each amount of adhered sea salt measured in a constant temperature bath by adhering a predetermined amount of sea salt beforehand. The amount of adhered sea salt can be estimated by measuring the current by the ACM corrosion sensor 110 and measuring the humidity by the hygrometer 30 (see Non Patent Literature 3).

In the second embodiment, the corrosion detecting apparatus 10A, the ACM corrosion sensor 110, and the hygrometer 30 are installed at the side of the tower 102, adjacent to each other.
The corrosion detecting apparatus 10A monitors degradation of the coated film, the ACM corrosion sensor 110 monitors a corrosion condition, and the hygrometer 30 monitors the humidity.

In each case of measurement, the current values (I₁, I₂) of the ACM corrosion sensor 110 and the corrosion detecting apparatus 10A of the coated film are measured, and the humidity at the time of measurement is also measured.

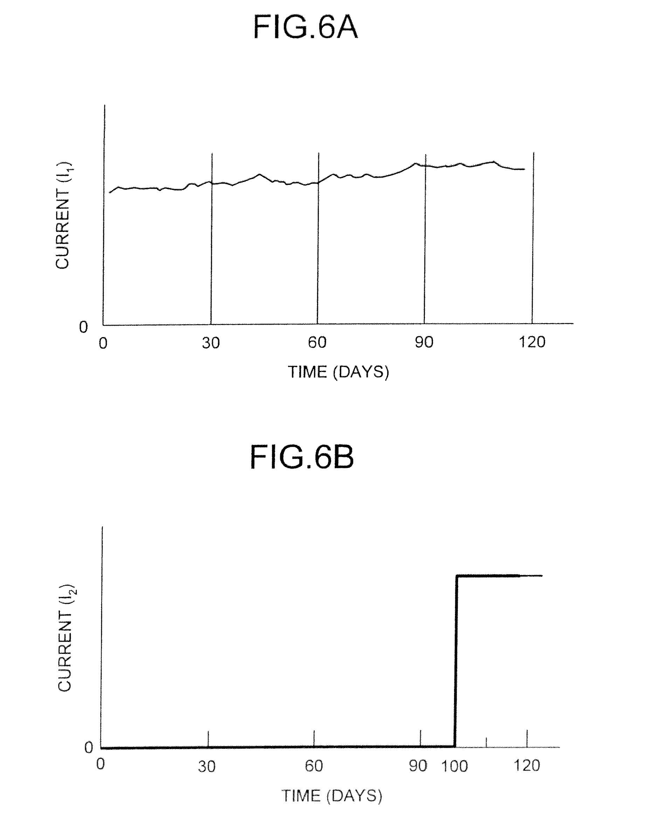

Fig. 6A is an example of measurement of the current value (I₁) of the ACM corrosion sensor 110 (for example, measured for 120 days), and Fig. 6B is an example of measurement of the current value (I₂) of the corrosion detecting apparatus 10A of the coated film.
As shown in Fig. 6B, it is assumed that degradation of the coated film (a crack) is confirmed by the corrosion detecting apparatus 10A (the current value has abruptly increased (100th day)) in continuation of measurement.
In this case, an adhering condition of sea salt in an installation environment of the sensor, that is, a corrosive environment until the crack has occurred can be confirmed based on measurement results of the current value by the ACM corrosion sensor 110 and the humidity obtained in advance.
For example, the corrosive environment can be estimated by integrating or averaging the current (I₁) obtained by the ACM corrosion sensor 110 until the crack occurs.

Furthermore, in Fig. 5, the amount of adhered sea salt at the time of measurement can be confirmed by the humidity and the current value at that time.
That is, as to how much sea salt has been adhered can be determined based on the relation between a current value obtained by the ACM corrosion sensor 110 and the humidity.
Accordingly, whether a measurement site is in a corrosion-prone environment can be determined.

Further, when degradation of the coated film is diagnosed, some measures can be taken before the structure itself corrodes. Generally, an atmospheric corrosion condition largely varies according to the corrosive environment at the installation site. Therefore, according to the present invention, detection of film degradation can be performed in advance by ascertaining the condition of the corrosive environment at the installation site.

When coating is applied again, for example, film degradation becomes an index for determining whether to apply coating in a standard film thickness or to apply impasto coating in which a film thickness is thick. Therefore, according to the present invention, some measures for preventing film degradation in the future can be taken, while taking into consideration the condition leading to film degradation (cracks or the like).

At this time, the influence of sunlight leading to a crack can be confirmed by using the actinometer that can measure the amount of insulation of sunlight. Therefore, a maintenance period corresponding to the season can be determined without determining the period simply by time.
That is, because the amount of insolation is different in summer and winter, some measures need to be taken corresponding to the amount of insolation, as well as according to the installation site.

Further, by using the spectral actinometer that can disperse the sunlight and measure an amount of ultraviolet light of a specific wavelength, the amount of ultraviolet light having large influence on film degradation can be ascertained, thereby enabling to take some measures, while taking the influence of the ultraviolet light into consideration.
That is, ultraviolet energy of sunlight is 410 kJ/mol, and for example, binding energy of an acrylic resin is 365 kJ/mol and binding energy of an inorganic resin is 435 kJ/mol. Therefore, intermolecular bonding in a coating material of the coated film is cut to generate a crack or rupture due to the influence of the ultraviolet light, because sunlight is irradiated over a long period of time.

In measurement of the amount of ultraviolet light, the influence of ultraviolet light due to reflection needs to be taken into consideration, other than the amount of ultraviolet light directly irradiated to the coated film. Therefore, at the time of measuring the amount of ultraviolet light, more accurate determination can be performed by converting a measurement result to the amount of ultraviolet light while taking a reflectance ratio into consideration.
For example, the reflectance ratio needs to be corrected such that the reflectance ratio is 10% to 25% in sandy beach, 10% on a concrete floor, 10% to 20% on an aqueous surface, and 10% or less on grass or ground.

Further, the amount of ultraviolet light is different between a wall surface and a top surface of the outdoor structure such that the amount of ultraviolet light on the top surface is about 2.5 times that on the wall surface. Therefore, for example, it is effective to install the sensor on the top surface of the nacelle and to take into consideration the degradation degree of the top surface of the nacelle.

### [Third embodiment]

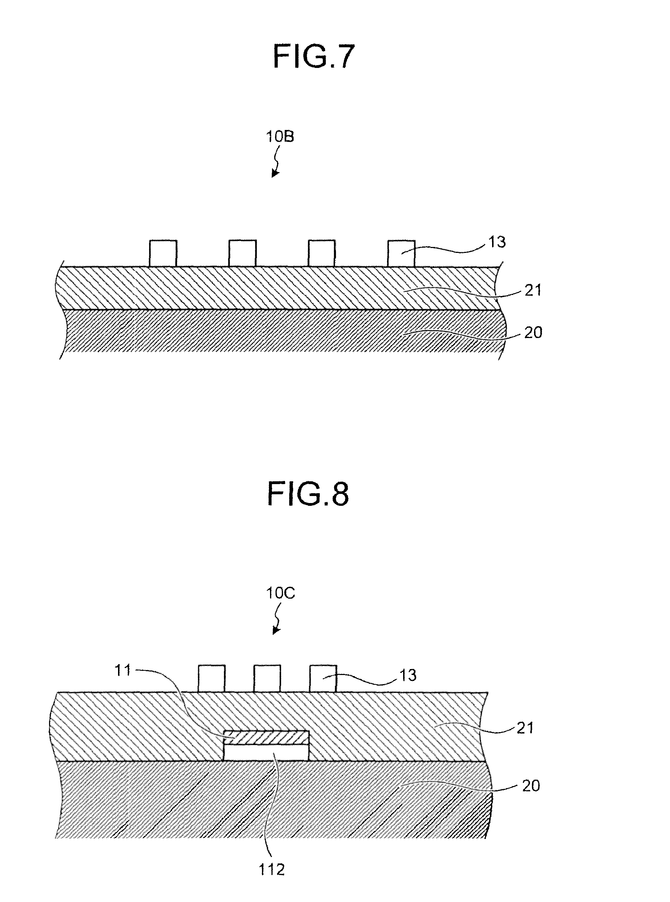

Another corrosion detecting apparatus of a coated film according to a third embodiment of the present invention is explained with reference to the drawings. Fig. 7 is a schematic diagram of the corrosion detecting apparatus of the coated film according to the third embodiment. As shown in Fig. 7, the corrosion detecting apparatus 10B according to the third embodiment includes the base material 20 of an outdoor structure as a first conductive part, the coated film 21 of the outdoor structure that covers the base material 20, and second conductive parts 13 provided on top of the coated film 21 with a predetermined gap therebetween, so that a corrosion current is detected by degradation of the coated film 21. In the third embodiment, the second conductive parts 13 are directly provided on the surface of the coated film 21 applied to the base material 20 of the outdoor structure to form a sensor structure, thereby enabling to monitor degradation of the coated film 21 with a simple configuration. In this manner, in the third embodiment, the outdoor structure having a corrosion detecting function can be obtained only by attaching the second conductive parts 13 on top of the coated film 21 applied to the outdoor structure as the insulating unit.

Further, as in a corrosion detecting apparatus 10C of a coated film shown in Fig. 8, the corrosion detecting apparatus of the coated film can include the base material 20 of the outdoor structure, the first conductive part 11 provided on the base material 20 via the insulating unit 112, the coated film 21 of the outdoor structure that covers the base material 20, and the second conductive parts 13 provided on top of the coated film 21 with a predetermined gap therebetween, so that a corrosion current is detected by degradation of the coated film 21.

This is because if the base material 20 is used as the first conductive part 11 as in Fig. 7, there is an influence of noise flowing on the base material 20. However, by providing the insulating unit 112 as in this example, the influence of noise can be prevented.

Further, determination as in the second embodiment can be performed by using any one of the corrosion detecting apparatuses 10B and 10C according to the third embodiment, the ACM corrosion sensor 110, and the hygrometer 30.

### [Fourth embodiment]

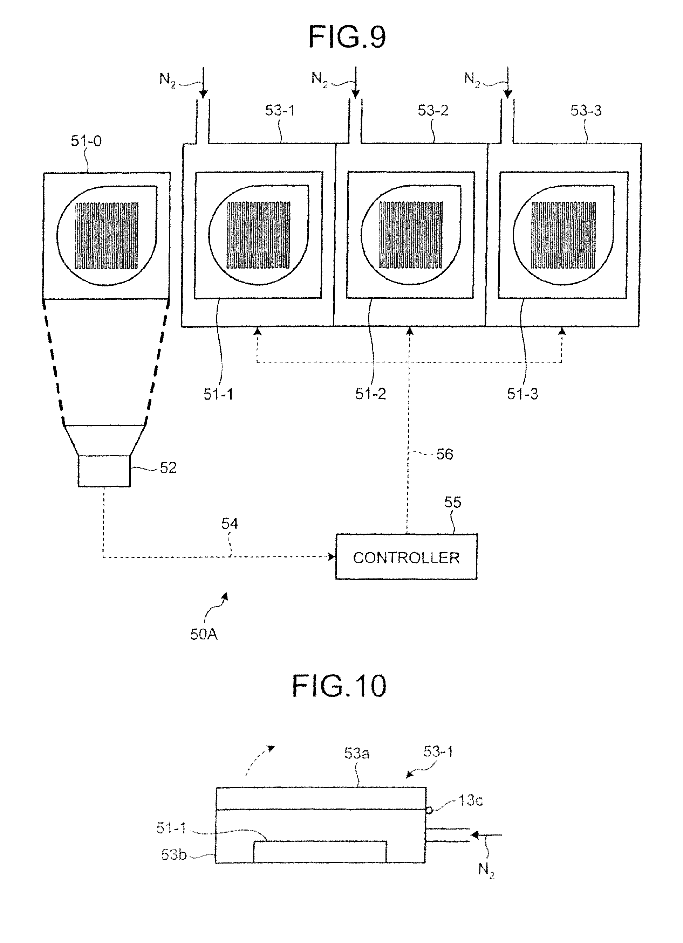

A corrosive-environment monitoring apparatus according to a fourth embodiment of the present invention is explained with reference to the drawings. Fig. 9 is a schematic diagram of the corrosive-environment monitoring apparatus according to the fourth embodiment. Fig. 10 is a schematic diagram of an arrangement state of a corrosion sensor during monitoring and a corrosion sensor during storing nitrogen.
As shown in Fig. 9, a corrosive-environment monitoring apparatus 50A according to the fourth embodiment includes a corrosion sensor 51-0 during monitoring that monitors the corrosive environment, a degradation degree analyzer 52 that measures degradation degree of the corrosion sensor 51-0 during monitoring, a plurality of storage containers 53-1, 53-2, and 53-3 that individually store unused corrosion sensors 51-1, 51-2, and 51-3 in an inert atmosphere, and a controller 55 that releases a lid 53a of the storage container 53-1 when it is determined that the corrosion sensor 51-0 during monitoring is degraded according to an analysis result of degradation degree by the degradation degree analyzer 52, to control switching so that the corrosive environment is measured by the unused first corrosion sensor 51-1. In Figs. 9 and 10, reference characters 54 denotes an information signal from the degradation degree analyzer 52, 53b denotes a container body, 53c denotes a hinge, 56 denotes an instruction signal from the controller to the corrosion sensors 51-1, 51-2, and 51-3.

The degradation degree analyzer 52 irradiates, for example, standard light to the surface of the corrosion sensor 51-0, and performs spectrum analysis of reflected light thereof, and for example, commercially available devices such as "color analyzer" and "color difference meter" can be used therefor.
In the present invention, when it is determined that the corrosion sensor 51-0 cannot continue detection according to an analysis by the degradation degree analyzer 52, the corrosion sensor 51-0 is replaced by the prepared unused corrosion sensor 51-1 to monitor the corrosive environment.
Further, for example, a light detector or the like having a spectral unit (a function capable of dividing a wavelength) can be used other than the color analyzer.

At the time of determining degradation degree of the corrosion sensor, for example, a testing area is divided into plural, and degradation degree is determined for each divided area. The controller 55 then performs switching so that when the degradation degree reaches a predetermined degree, measurement is performed by the unused corrosion sensor 51-1.
Specifically, a region of the conductive part is divided into 8 or 16, to measure an RGB value for each divided region, and when a color of a region changes close to a determination color specified as corrosion, the region is determined as being degraded.
A threshold indicating that when a ratio determined as being degraded exceeds 50%, replacement of the corrosion sensor is required is predetermined.
As a result of determination, when the ratio is less than 50%, the corrosion sensor 51-0 during monitoring is used to continue monitoring of the corrosive environment, and when the ratio exceeds 50%, the sensor is switched to the next corrosion sensor 51-1.

This measurement is performed in such a manner that when the degradation degree analyzer 52 is a color analyzer having color sensors of R (red), G (green), and B (blue), determination of degradation is performed when a measurement result of RGB comes close to a color value (R(115):G(78):B(48)) of brown (of JIS conventional color name).

The determination can be performed by using a method of measuring the whole region of the conductive part of the corrosion sensor 51-0 at a time and dividing measured information by using the degradation degree analyzer 52. Further, the region of the conductive part can be divided into plural and measurement can be performed for an individual region by moving the degradation degree analyzer 52 to perform the determination.

Further, a quantity of corrosion electricity (coulomb) from the sensor can be monitored together. In this case, because monitoring can be performed according to the color of the sensor and the quantity of corrosion electricity, replacement period of the corrosion sensor can be determined more appropriately.

The unused corrosion sensors 51-1 to 51-3 are currently stored in a purged state by the inert gas (for example, nitrogen (N₂)) without moisture in the respective storage containers (three containers in the fourth embodiment) 53-1 to 53-3. When the prepared corrosion sensors for replacement are installed, for example, in a remote area, the number thereof can be determined according to an installation environment while taking maintenance frequency into consideration.
The storage container can be released by a remote operation.

In a case of the corrosion sensor at a place where maintenance is performed several times per month, an examiner can replace the corrosion sensor.

### [Fifth embodiment]

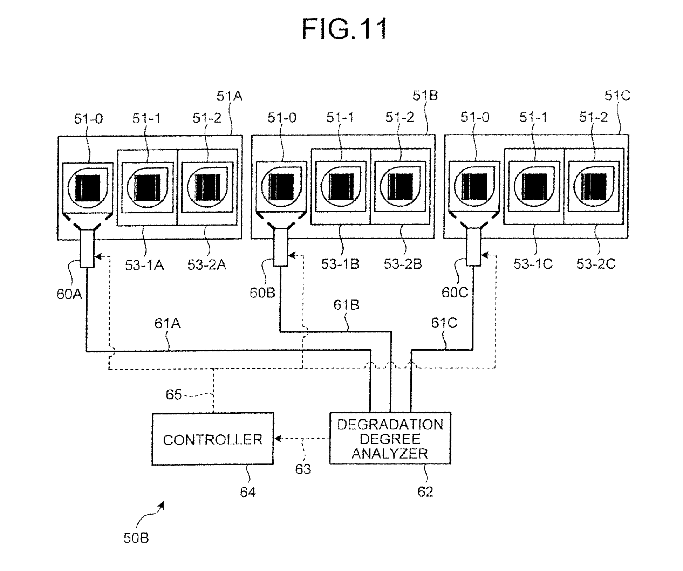

A corrosive-environment monitoring apparatus according to a fifth embodiment of the present invention is explained with reference to the drawings. Fig. 11 is a schematic diagram of the corrosive-environment monitoring apparatus according to the fifth embodiment.
As shown in Fig. 11, a corrosive-environment monitoring apparatus 50B according to the fifth embodiment includes the corrosion sensor 51-0 during monitoring that individually monitors the corrosive environment at a plurality of locations, that is, a location A (11A), a location B (11B), and a location C (11C), corrosion sensor parts 51A, 51B, and 51C having unused corrosion sensors 51-1, ... stored in the storage containers, imaging units 60A, 60B, and 60C installed individually facing the corrosion sensor 51-0 during monitoring in the corrosion sensor parts 51A, 51B, and 51C to transmit an image information signal to a degradation degree analyzer 62 that measures degradation degree of the surface of the corrosion sensor 51-0, electronic transmitting units 61A, 61B, and 61C that transmit respective pieces of imaging information to the degradation degree analyzer 62, the degradation degree analyzer 62 that determines degradation degree of the respective pieces of imaging information, a controller 64 that individually releases the storage containers 53-1A, 53-1B, 53-1C at a plurality of locations, according to a determination result 63 of the degradation degree analyzer 62 to perform control 65 for switching so that the corrosive environment is measured by the unused corrosion sensor 51-1, and a shift controller (not shown) that individually shifts the imaging units 60A, 60B, and 60C to capture images of the corrosion sensor 51-1 that newly performs measurement due to switching by the controller 64. In Fig. 11, a nitrogen purge function shown in Fig. 9 is omitted.

In the fifth embodiment, pieces of image information are consolidated in the degradation degree analyzer 62 at one location, and the consolidated pieces of image information are analyzed for each location, to individually confirm degraded conditions at the location A, the location B, and the location C.
A method of determining the degree of corrosion degradation is shown below.
1) First, pieces of image information obtained by the imaging units 60A to 60C installed at a plurality of locations are respectively accumulated in the degradation degree analyzer 62.
2) When a measurement result of RGB in each sensor close to the color value (R(115):G(78):B(48)) of brown becomes 50% or more, it is determined that the sensor is "being degraded".
3) For example, when the corrosion sensor 51-0 at the location A is determined as "being degraded", a lid of the storage container 53-1A is released so that the corrosive current is continuously measured by the unused corrosion sensor 51-1. At this time, the imaging unit 60A is shifted to a location facing the unused corrosion sensor 51-1 by the shift controller (not shown), to capture images of the surface continuously, and transmits imaging information to the degradation degree analyzer 62.
4) An imaging area of the imaging unit 60A and the like can be cleaned by a cleansing unit such as jet spray, so that the imaging area can be held clean at all times.
   In the fifth embodiment, the color value of "brown" is used; however, the present invention is not limited thereto. For example, a color attributed to corrosion degradation of the sensor, such as bister (R(118):G(57):B(0)) or burnt sienna (R(186):G(100):B(50)) can be used.

As described above, the pieces of degradation information are centrally managed at a plurality of separated locations, and measurement is performed by a new corrosion sensor according to the degradation degree, thereby enabling to monitor the corrosion condition in an adequate state at all times over a long period.

### [Sixth embodiment]

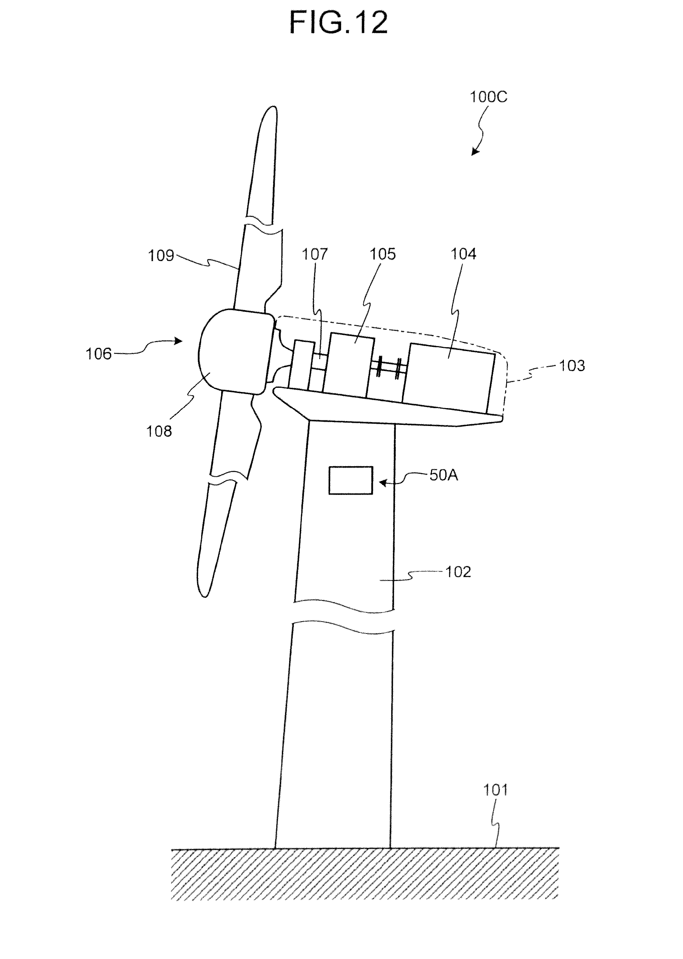

An outdoor structure whose corrosive environment is monitored by using the corrosive-environment monitoring apparatus according to a sixth embodiment of the present invention is explained. Fig. 12 is a side view of a wind power station as an example of the outdoor structure. As shown in Fig. 12, a wind power station 100C includes the tower 102 installed, for example, on the ground 101, and the nacelle 103 provided at an upper end of the tower 102. The nacelle 103 is turnable in a yaw direction, and can be directed toward a desired direction by a nacelle turning mechanism (not shown). The power generator 104 and the speed-up gear 105 are mounted on the nacelle 103. A rotor of the power generator 104 is bonded to the main spindle 107 of the wind turbine rotor 106 via the speed-up gear 105. The wind turbine rotor 106 includes the hub 108 connected to the main spindle 107 and the vanes 109 fitted to the hub 108.

In the sixth embodiment, as shown in Fig. 12, even when the corrosion sensor is installed at a side of the tower 102 or inside the nacelle 103 of the wind power station 100C, which is the outdoor structure, by providing the corrosive-environment monitoring apparatus 50A (50B) as shown in Fig. 9 (or Fig. 11), monitoring can be performed by the corrosion sensor in a new state at all times. Accordingly, the corrosion monitoring accuracy can be maintained constant at all times. In Fig. 12, only the corrosive-environment monitoring apparatus 50A is shown.

The outdoor structure of the present invention has been explained above by exemplifying a wind power station. However, the present invention is not limited thereto, and can be applied to other constructions such as bridges, solar-powered devices, power generation plants, steel-reinforced building structures, and railway facilities on seashore, which require a salt damage countermeasure. The present invention is also applicable to the salt damage countermeasure for a mobile body such as vehicles and ships and vessels.

### [Seventh embodiment]

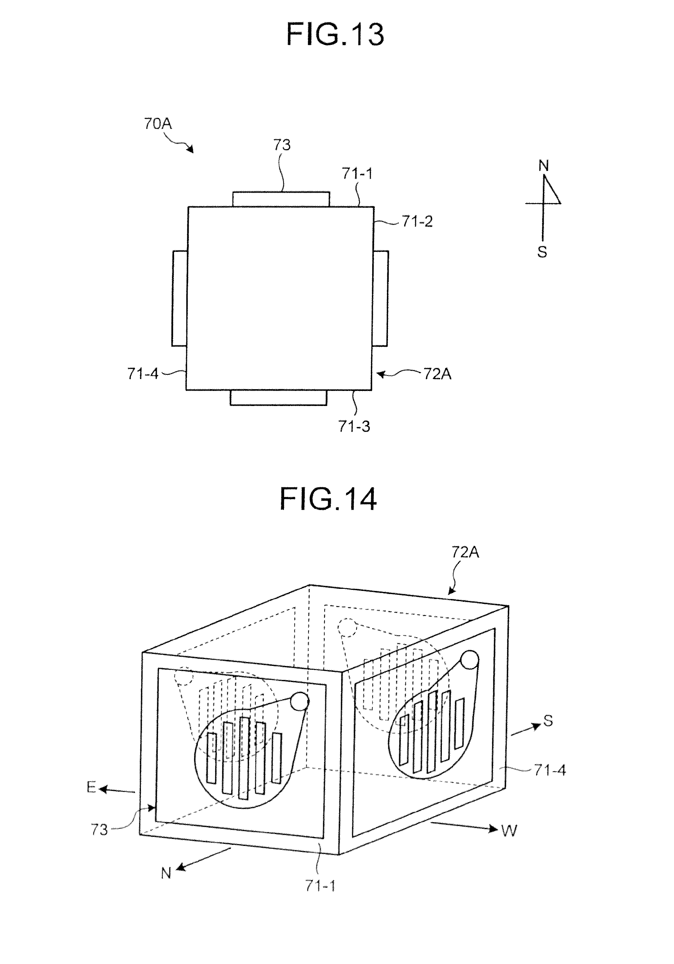

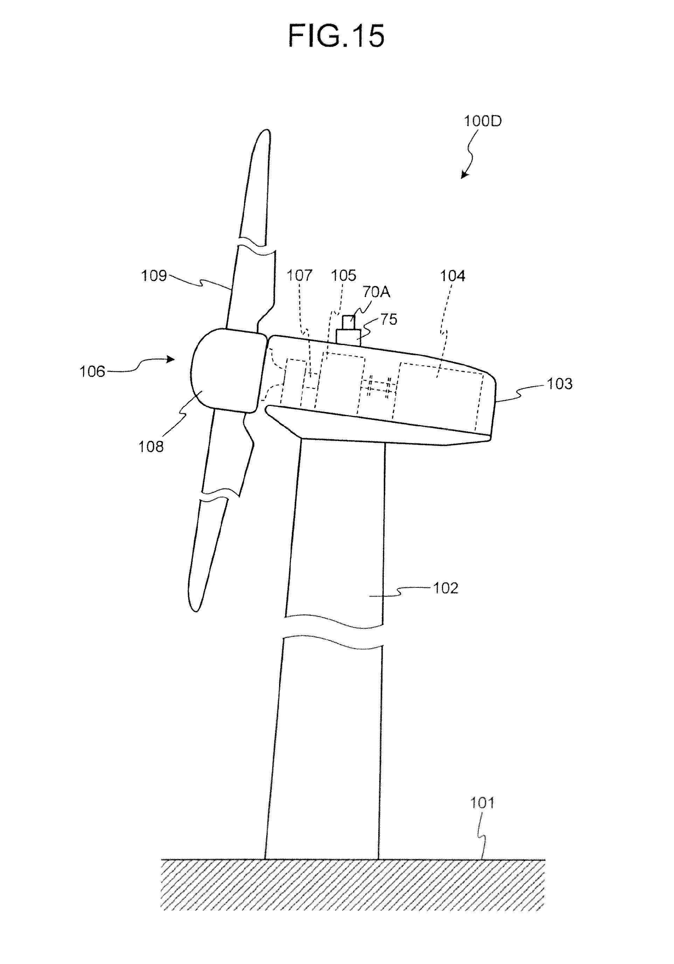

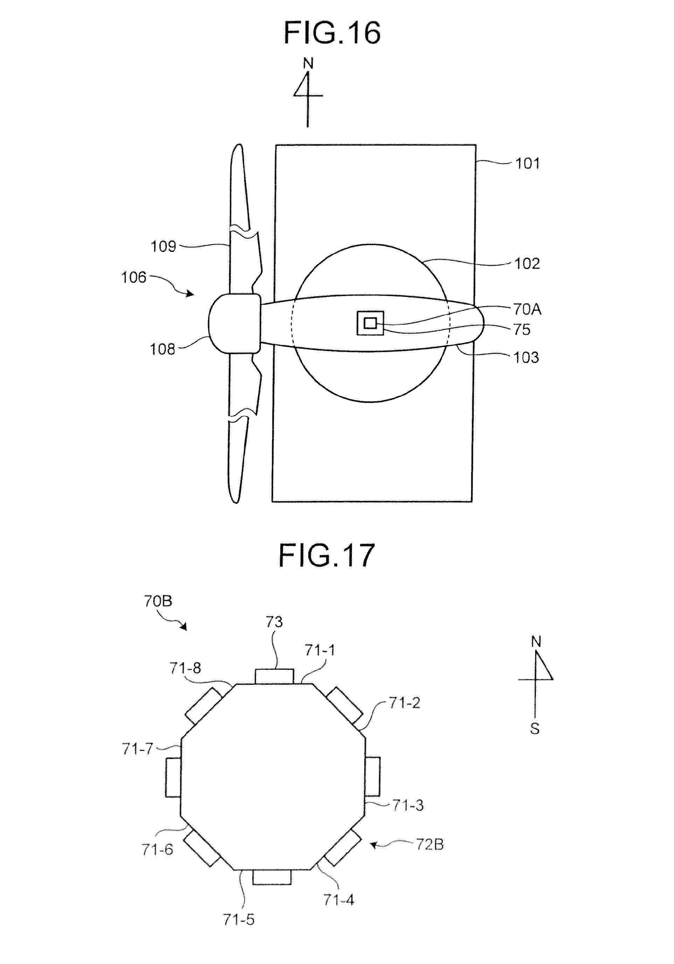

A corrosion detecting apparatus and an outdoor structure according to a seventh embodiment of the present invention are explained with reference to the drawings. Fig. 13 is a schematic diagram of a corrosion detecting apparatus according to the seventh embodiment. Fig. 14 is a perspective view thereof. Fig. 15 is a side view of a case when the corrosion detecting apparatus is installed in a wind power station as an example of the outdoor structure. Fig. 16 is a plan view thereof.
As shown in Figs. 13 to 16, a corrosion detecting apparatus 70A according to the seventh embodiment includes a polyhedral supporting unit 72A having four substantially vertical planes 71-1 to 71-4, a corrosion sensor 73 respectively provided on the substantially vertical planes 71-1 to 71-4 of the polyhedral supporting unit 72A, and a holding unit 75 that holds the polyhedral supporting unit 72A provided with the corrosion sensors 73, while maintaining the polyhedral supporting unit 72A in a predetermined direction with respect to the outdoor structure.

The holding unit 75 is, as shown in Fig. 15, for holding the respective planes of the polyhedral supporting unit 72A provided with the corrosion sensor 73, while maintaining the polyhedral supporting unit 72A in a predetermined direction, and for example, includes a magnetic direction sensor on the top surface of the nacelle 103 of the tower 102.
That is, in Fig. 13, as an example, the first plane 71-1 of the polyhedral supporting unit 72A of the corrosion detecting apparatus 70A is installed to point north (N), the second plane 71-2 is installed to point east (E), the third plane 71-3 is installed to point south (S), and the fourth plane 71-4 is installed to point west (W).
As a result, because a predetermined direction is maintained at all times based on the information of the magnetic direction sensor, the four planes of the corrosion detecting apparatus 70A can measure the corrosive environment in the same direction at all times.

In the corrosion sensor 73, the base material 111 as shown in Figs. 24 and 25A is formed as the first conductive part, and the conductive parts 113 are formed as the second conductive parts on top of a plurality of linear insulating units 112 provided on top of the first conductive part with a predetermined gap therebetween, via the insulating units 112. The corrosion current is detected by an influence of an adhered salt content.

As a material forming the first conductive part, for example, aluminum (Al), iron (Fe), zinc (Zn), or stainless steel can be preferably used. As a material forming the second conductive part, for example, gold (Au), platinum (Pt), silver (Ag), or a carbon material such as graphite can be preferably used.

As a material forming the insulating unit SiO₂ can be used, for example.
The corrosion sensor 73 is not limited to the one having the configuration of the corrosion sensor 110 as shown in Fig. 24, and any one that can quickly determine the influence of the adhered salt content can be used.

As shown in Fig. 15, a wind power station 100D includes the tower 102 installed, for example, on the ground 101, and the nacelle 103 provided at an upper end of the tower 102. The nacelle 103 is turnable in a yaw direction, and can be directed toward a desired direction by a nacelle turning mechanism (not shown). The power generator 104 and the speed-up 105 are mounted on the nacelle 103. A rotor of the power generator 104 is bonded to the main spindle 107 of the wind turbine rotor 106 via the speed-up gear 105. The wind turbine rotor 106 includes the hub 108 connected to the main spindle 107 and the vanes 109 fitted to the hub 108.

In the seventh embodiment, as shown in Figs. 15 and 16, the corrosion detecting apparatus 70A is provided on a top surface of the nacelle 103 on the tower 102 of the wind power station 100, which is the outdoor structure, via the holding unit 75.

Accordingly, the corrosive environment in a predetermined direction can be measured at all times, and an influence of corrosion corresponding to the direction can be determined. Therefore, in a specific environment according to seasonal wind, subtropical westerlies, and an angle of the sun, progress of corrosion corresponding to the environment of the site can be confirmed.

According to the present invention, the degradation degree can be quickly determined regarding the chronological change due to corrosive factors such as sea slat and rain water while by taking the orientation of the structure into consideration. Accordingly, some measures for suppressing degradation (for example, cleansing and drying) can be taken quickly.

In the seventh embodiment, the corrosion detecting apparatus has four planes. However, the present invention is not limited thereto, and for example, as shown in the schematic diagram of another corrosion detecting apparatus shown in Fig. 17, a polyhedral supporting unit 72B of a corrosion detecting apparatus 70B having the first plane 71-1 to an eighth plane 71-8 is installed to point north (N), as an example. Accordingly, determination of the orientation becomes accurate at the time of determining the degradation degree.

### [Eighth embodiment]

Further, a pH meter (not shown) can be provided near the corrosion detecting apparatus 70A or 70B, and an acid rain countermeasure can be taken according to the pH.

That is, in the neutral pH range in which the pH of the pH meter is 7, chlorine ion (Cl⁻) is the main body. However, when the pH is 7 or less, sulfate ion (SO₄⁻) is mixed with the main chlorine ion (Cl⁻). When the pH is 5.8 or less, the main body becomes the sulfate ion (SO₄⁻) rather than the chlorine ion (Cl⁻), and the acid rain countermeasure is required.
As the acid rain countermeasure, a coated film needs to be formed as the acid rain countermeasure at the time of next application of the coated film, in addition to careful cleansing at the time of cleansing of the exterior coated film.

### [Ninth embodiment]

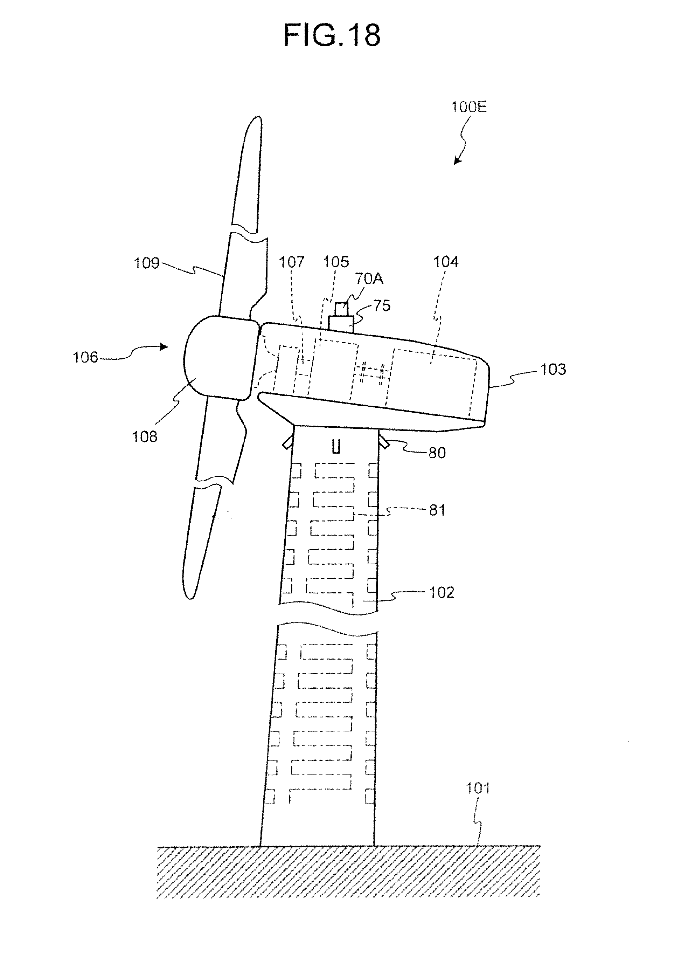

Fig. 18 is a side view of a case when a corrosion detecting apparatus is installed in a wind power station as an example of an outdoor structure according to a ninth embodiment of the present invention.
In the ninth embodiment, a hygrometer (not shown) is installed near the corrosion detecting apparatus 70A, to measure an amount of adhered sea salt according to the moisture content thereof.
Accordingly, the amount of adhered sea salt, which is important as the corrosion factor, can be ascertained.
Fig. 5 is used for the relation between relative humidity and a corrosion current value.

In Fig. 18, the corrosion detecting apparatus 70A including the holding unit 75 having a magnetic direction sensor is installed on the top surface of the nacelle 103 of a wind power station 100E.
Accordingly, the four (or eight) planes of the corrosion detecting apparatus can measure the corrosive environment in the same direction at all times, while consistently maintaining a certain direction according to information from the magnetic direction sensor. Therefore, the corrosive environment of the four (or eight) planes can be confirmed.

While regular cleansing can be sufficient, cleansing only may not be a corrosion countermeasure due to the following reasons. Measures against it are explained below.
That is, at locations by a sea or at a sea, in a case that sea salt simply adheres to the surface of the tower 102, cleansing can wash sea salt, and thus there is a cleaning effect. On the other hand, when sea salt is not adhered, positive cleansing has an adverse effect (accelerates corrosion), and it is important to maintain low humidity (drying).
For example, drying may not be sufficient at all times in the north where sunlight does not hit. There can be a case that rust is generated by a simple water film, and drying is required in this case. Therefore, useless cleansing leads to generation of rust.

Accordingly, not only cleansing but also drying are required as the corrosion countermeasures for the coated film.
A washing nozzle 80 of a sprinkler system and a heater 81(about 50°C) are installed at the side of the tower 102.
The heater 81 can heat the surface of the tower up to about 50°C to dry the surface of the tower 102. When the amount of adhered sea salt is small (<1 to 10 mg/m²), cleansing is performed, and thereafter it is effective to dry the surface by the heater 81.

The heater 81 in the present invention is not particularly limited, and a sheath heater can be exemplified.
The sheath heater can be directly adhered to a metal, and has excellent adhesiveness even on the curved surface of the tower, thereby enabling to provide good thermal conductivity.
The sheath heater can be turned on/off corresponding to the direction of the sensor, and for example, dries the surface of the tower in the north, south, east, and west directions with respect to the sensors in the north, south, east, and west.
Arrangement of the heater 81 such as the sheath heater corresponds to each direction of the corrosion detecting apparatus 70A, and heaters are arranged in zigzag in a vertical direction. However, the present invention is not limited thereto.

For example, as a method of attaching the heater 81, the heater 81 can be adhered to the inside of the tower. This is because by attaching the heater to outside of the tower surface, corrosion factors are likely to be adhered to the heater, thereby causing degradation of the coated film on the surface of the tower.

As a case that the heater is adhered to outside of the tower, there can be mentioned a case that a groove for embedding a heater is formed on the surface of the tower, the heater is embedded in the groove, and after tightness and smoothness are ensured by embedding the heater with a material same as that of the tower, the heater is covered with a film as in a case of applying a coating material to a tower material.

The corrosion detecting apparatus 70A then performs measurement, and when salt adheres at a specific orientation, cleansing is performed. As cleansing water, rain water or fresh water obtained by a desalination plant using an RO film can be used.

In such cleaning precautions, by using the corrosion detecting apparatus 70A according to the present invention, it can be determined whether to perform cleansing or heating/drying while taking the directionality of the structure into consideration.

As described above, because measures (cleansing or drying) against corrosion can be taken according to the orientation, useless cleansing can be eliminated, and degradation due to a chronological change of the environment can be efficiently prevented, by cleansing only a required portion, while taking the orientation of the structure into consideration.
For example, when the amount of adhered sea salt is large (>50 mg/m²) in a certain orientation, drying after cleansing is performed. When there is no adhesion of sea salt in a certain orientation, and the surface is in a wet condition, drying is performed.

When the humidity is low and there is adhesion of sea salt, sea salt needs to be washed to prevent degradation due to sea salt.
For example, in a place where an amount of rain water is small, sea salt cannot be washed, and thus degradation due to deposition of sea salt occurs. In this case, sea salt can be washed by cleansing using rain water or fresh water obtained by using the RO film.

An environmental change due to concentration of salt based on humidity, which is a factor of a corrosive environment, is explained with reference to Fig. 5.
As shown in Fig. 5, the degree of water film generation (wettability due to sea salt) changes due to a humidity change. For example, when the amount of sea salt is small (10 mg/m²) in humidity 30%, because the influence of sea salt is small and generation of a water film hardly occurs, corrosion is not accelerated.
However, as the amount of sea salt increases (for example, 50 mg/m²), the wettability of the surface increases even in the same humidity 30%, and a corrosion current flows, thereby accelerating corrosion.
The water film indicates a mixed degree of Cl⁻ resulting from sea salt, and thus it becomes an index of the wettability. As a result, measurement of humidity means that water film generation due to humidity is taken into consideration.

That is, even if humidity is low and the surface of the outdoor structure is not wet, it cannot be said that corrosion is not accelerated. Even when humidity is low, if concentration of salt is high, a corrosive environment may be generated due to the wettability because of deliquescency thereof.
In such a case, measures for removing the adhered sea salt by cleansing or the like need to be taken.

A corrosion protection method with respect to the outdoor structure while taking the orientation of the structure into consideration is shown below.
1) First, the directionality of corrosion is determined by the corrosion detecting apparatus 70A.
2) The amount of adhered sea salt is measured by the corrosion sensor 73.
3) The corrosive environment corresponding to the directionality is determined based on 1) and 2).
4) It is determined whether to perform cleansing or drying, for example, of the tower 102 as the outdoor structure according to the amount of adhered sea salt, based on a result of 3).
5) Cleansing or drying is performed according to a result of 4).
   As described above, because measures against corrosion (cleansing or drying) according to the orientation can be taken, only a necessary portion is washed or dried while taking the orientation of the structure into consideration, thereby enabling to eliminate useless cleansing, and efficiently prevent degradation due to a chronological change of the environment.

A step of performing corrosion detection according to the present invention is explained next with reference to a flowchart.

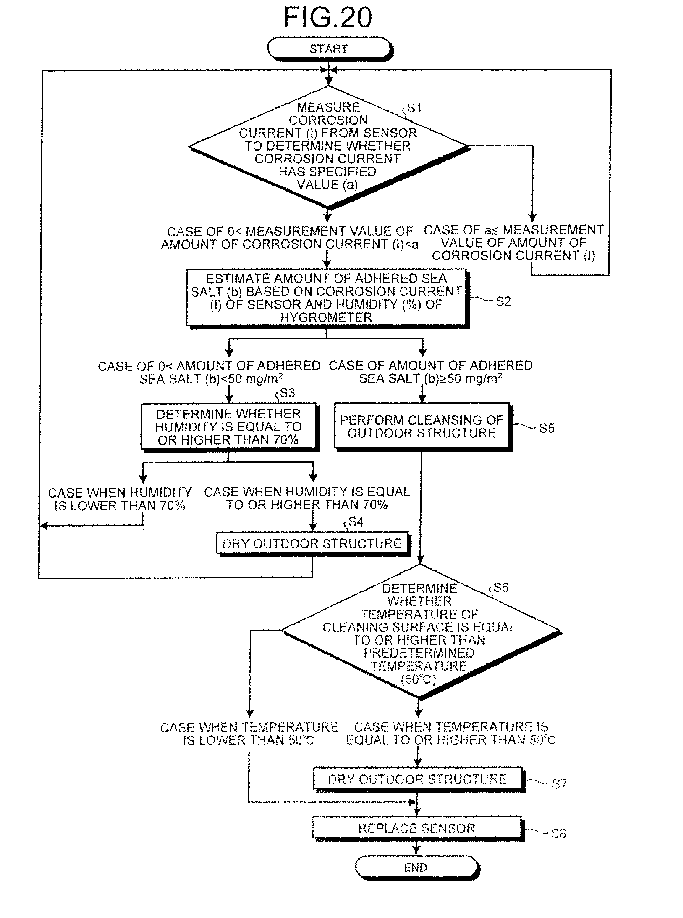

Fig. 20 is a flowchart of a first mode.
A first flowchart relates to a case of control based on an amount of adhered sea salt (b).
First step) At the first step, a corrosion current (I) from a sensor is measured, to determine whether the corrosion current has a specified value (a) (S1). As the specified value (a) at the first step, about 1 microampere is preferable.
As a result of determination at the first step, in the case of "a≤ measurement value of amount of the corrosion current (I)", it is determined to be exposure to rain, control returns to the first step, to continuously measure the corrosion current.
Second step) At the second step, as a result of determination at the first step, in the case of "0≤ measurement value of amount of the corrosion current (I)<a", the amount of adhered sea salt (b) is estimated based on the measurement value of amount of the corrosion current (I) of the sensor and humidity (%) of a hygrometer from Fig. 5 (S2).
Third step) At the third step, when the estimated amount of adhered sea salt (b) is "0< amount of adhered sea salt (b)<50 mg/m²", it is further determined whether "humidity is equal to or higher than 70%" (S3).
Fourth step) At the fourth step, when "humidity is equal to or higher than 70%", an outdoor structure is dried (S4). Thereafter, control returns to the first step, to measure the corrosion current again.
On the other hand, when "humidity is lower than 70%", control returns to the first step, to measure the corrosion current.
Fifth step) At the fifth step, in the case of "amount of adhered sea salt (b)>50 mg/m²", the outdoor structure is washed (S5).
Sixth step) At the sixth step, it is determined whether temperature of a cleaning surface is equal to or higher than 50°C (S6).
Seventh step) At the seventh step, when "the temperature is lower than 50°C", the outdoor structure is dried (S7).
Eighth step) At the eighth step, replacement of the corrosion sensor is performed, while drying the outdoor structure (S8).
At the sixth step, when the temperature is equal to or higher than 50°C, the corrosion sensor is replaced without drying the outdoor structure (S8), to finish the step.
After replacement of the sensor, the sensor is reset to measure the corrosion current again.

As described above, according to the present method, the amount of adhered sea salt (b) is estimated based on the amount of current and humidity, and a corrosion condition of the outdoor structure is determined based on the estimation. Cleansing, drying or the like can be performed if necessary.

At the eighth step, the reason why the sensor is replaced is that the corrosion sensor 73 itself of the corrosion detecting apparatus 70A is not washed, while the outdoor structure is washed, and thus sea salt is still adhered to the corrosion sensor 73. Therefore, the sensor is replaced so that the corrosive environments of the sensor and the outdoor structure become the same, to return to an initial state to measure the corrosive environment. When the corrosion sensor includes a cleansing unit and a drying unit same as those of the outdoor structure, the corrosion sensor can continue measurement without being replaced.

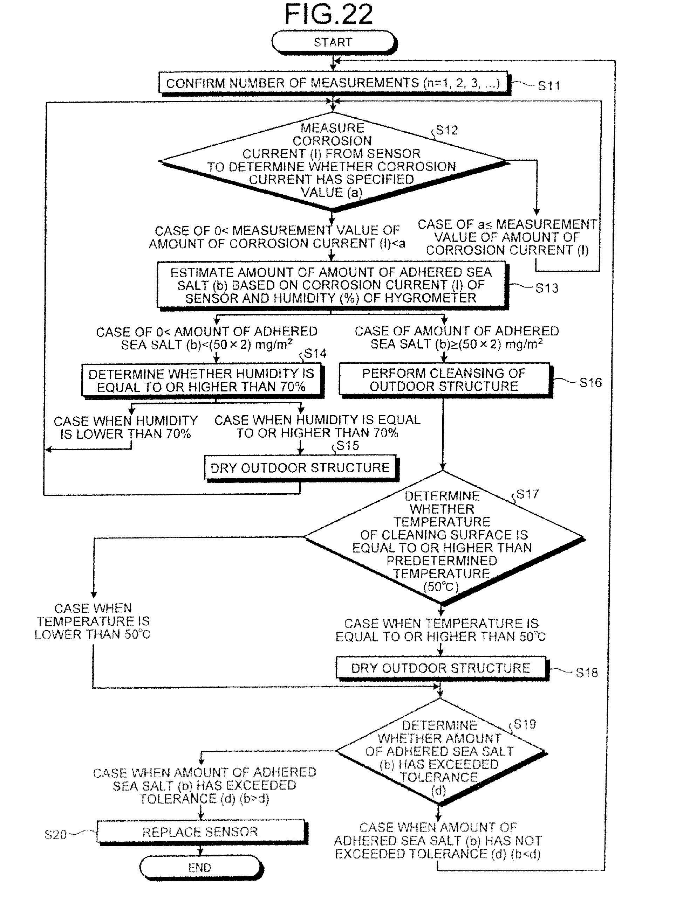

Fig. 22 is a flowchart of a second mode. The flowchart in the second mode represents a case of control based on the amount of adhered sea salt (b), in which number of measurements is confirmed to perform corrosion detection, while taking the corrosion condition of the sensor into consideration.
First step) At the first step, the current number of measurements is confirmed (n=1, 2, 3, ...: S11).
Second step) At the second step, a corrosion current from a sensor is measured, to determine whether the corrosion current (I) has a specified value (a) (S12). As the specified value (a) at the first step, about 1 microampere is preferable.
Third step) At the third step, as a result of determination at the second step, in the case of "0≤ measurement value of amount of the corrosion current (I)<a", the amount of adhered sea salt (b) is estimated based on the amount of the corrosion current (I) of the sensor and humidity (%) of the hygrometer from Fig. 5 (S13). As a result of determination at the second step, in the case of "a≤ measurement value of amount of the corrosion current (I)", it is determined to be exposure to rain, control returns to the second step, to continuously measure the corrosion current.
Fourth step) At the fourth step, when the estimated amount of adhered sea salt (b) is "0≤ amount of adhered sea salt (b)<(50×n) mg/m²", it is further determined whether "humidity is equal to or higher than 70%" (S14).
Fifth step) At the fifth step, when "humidity is equal to or higher than 70% (YES)", an outdoor structure is dried (S15). Thereafter, control returns to the second step, to measure the corrosion current again, without via the first step.
On the other hand, when "humidity is lower than 70% (NO)", control returns to the second step, to measure the corrosion current again, without via the first step.
Sixth step) At the sixth step, when "amount of adhered sea salt (b)≥(50×n) mg/m²", the outdoor structure is washed (S16).
Seventh step) At the seventh step, it is determined whether temperature of the cleaning surface is equal to or higher than 50°C (S17).
Eighth step) At the eighth step, when "the temperature is lower than 50°C (NO)", the outdoor structure is dried (S18).
Ninth step) At the ninth step, it is determined whether the amount of adhered sea salt (b) estimated at the third step has exceeded a tolerance (d).

When the amount of adhered sea salt (b) has not exceeded the tolerance (d), it is determined that the corrosion sensor 73 can be reused, and control returns to the first step to confirm the number of measurements (S11), where the number is increased by one to become n=2.
The increase of the number is used for determination of the amount of adhered sea salt (b) at the third step, to set a threshold to 50×2 (n=2) mg/m².
That is, the amount of sea salt adhered to the sensor becomes 50×2 (n=2) mg/m² (n=1, 2, ...), and measurement can be performed until the amount of adhered sea salt (b) reaches the tolerance (d) of sea salt adhered to the surface of the sensor.
For example, when the tolerance (d) is set to 200 mg/m², the corrosion sensor 73 can be used repeatedly up to four times (50×4 mg/m²) for measurement of the corrosive environment, without being replaced.
Tenth step) At the tenth step, when the amount of adhered sea salt (b) has exceeded the tolerance (d), because the sensor cannot be reused, the corrosion sensor 73 is replaced (S20).

At the seventh step, when the temperature of the cleaning surface is equal to or higher than 50°C (YES)", control proceeds to the ninth step without drying the outdoor structure, to determine whether the amount of adhered sea salt (b) estimated at the third step has exceeded the tolerance (d) (S19), and replaces the sensor if necessary (S20), to finish the step.
After replacement of the sensor, the sensor is reset to measure the corrosive environment again.

As described above, the amount of adhered sea salt is estimated based on the amount of current and humidity, and a corrosion condition of the outdoor structure is determined based on the estimation. If necessary, cleansing or drying can be performed.

Further, differently from the first mode, by confirming adhesion of sea salt up to usage tolerance of the sensor, the sensor can be reused without replacement by increasing the amount of adhered sea salt.

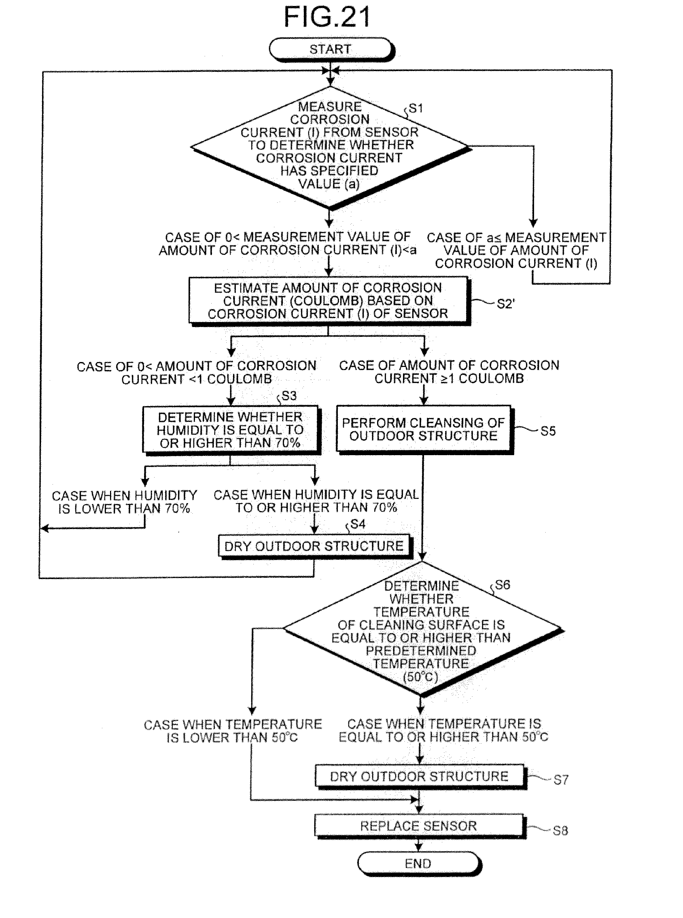

Fig. 21 is a flowchart of a modified example of the first mode.
At the second step (S2) in the first mode, the amount of adhered sea salt (b) is estimated. However, in the flowchart in the modified example, at the second step, an amount of a corrosion current (coulomb) is estimated based on the corrosion current (I) of the sensor (S2'). It is determined that the estimated amount of current is a threshold of 1C (coulomb) (in the case of 0< amount of corrosion current <1 coulomb, or amount of corrosion current >1 coulomb), to perform the third or fifth step.
As described above, the amount of current is estimated based on a chronological change in the amount of current, and the corrosion condition of the outdoor structure is determined based on the estimation. If necessary, cleansing or drying can be performed.

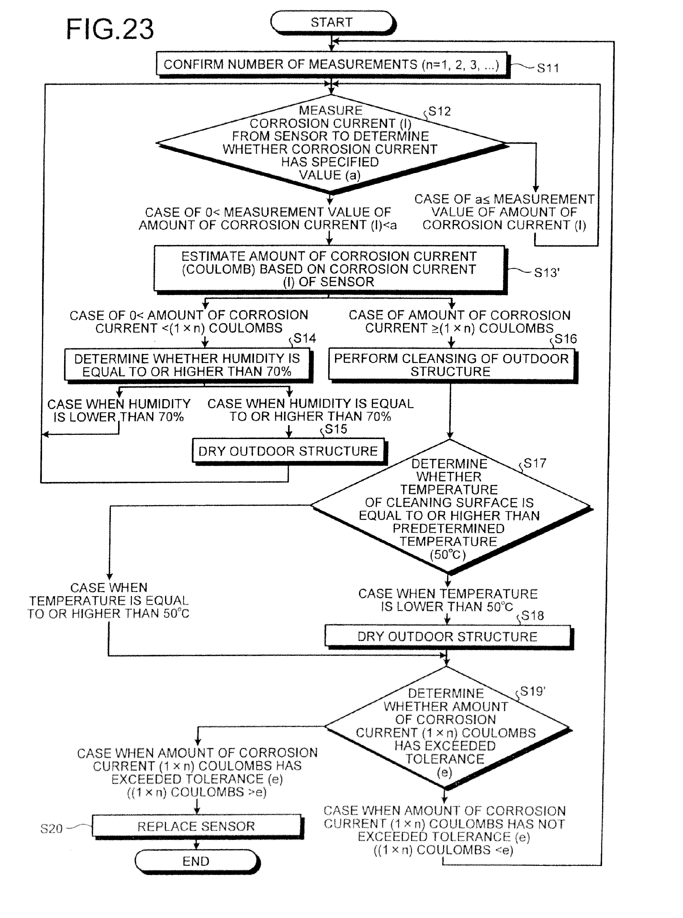

Fig. 23 is a flowchart of a modified example of the second mode, where at the third step, an amount of a corrosion current (coulomb) is estimated based on the corrosion current (I) of the sensor (S13'). In this manner, the corrosion condition is determined based on the amount of the corrosion current.
The fourth to eighth steps are the same as those in the second mode. However, at the ninth step, it is determined whether the amount of the corrosion current (1×n) coulombs estimated at the third step has exceeded a tolerance (e) (S19'). The tolerance (e) of the amount of the corrosion current is 3 to 15 coulombs, and about 5 coulombs are preferable.
When the tolerance (e) has not been exceeded, it is determined that the corrosion sensor 73 can be reused, to return to the first step to confirm the number of measurements (S11), where the number is increased by one to become n=2. The increase of the number is used for determination of the amount of a corrosion current at the third step, to set a threshold to 1×2 (n=2) coulombs.
That is, the amount of the corrosion current becomes 2 coulombs, and measurement can be performed up to the tolerance (e) of the amount of the corrosion current.
At the tenth step, when the tolerance (e) has been exceeded, because the corrosion sensor 73 cannot be reused, the sensor is replaced (S20).
At the seventh step, when the temperature of the cleaning surface is equal to or higher than 50°C (YES)", control proceeds to the ninth step without drying the outdoor structure, to determine whether the amount of the corrosion current estimated at the third step has exceeded the tolerance (e) (S19'), and replaces the sensor if necessary (S20), to finish the step.

### [Tenth embodiment]

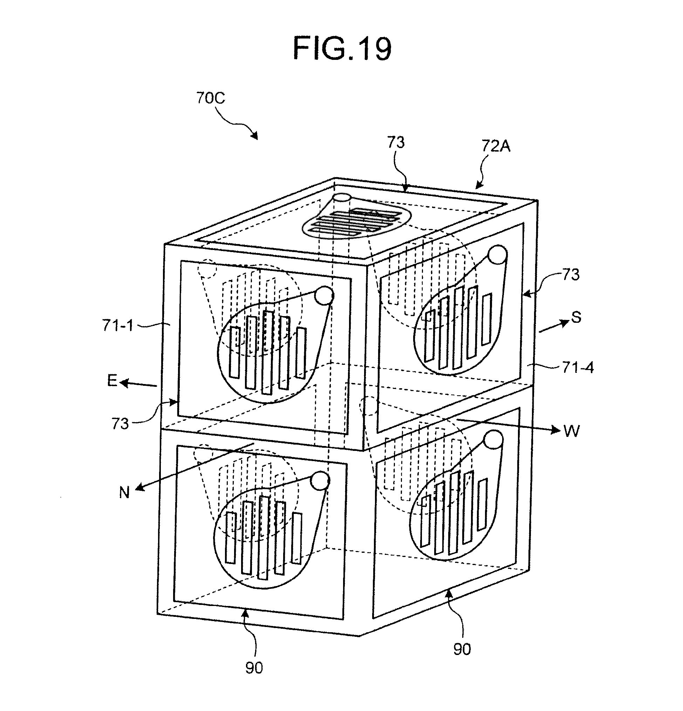

A corrosion detecting apparatus according to a tenth embodiment of the present invention is explained below with reference to Fig. 19.
As shown in Fig. 19, a corrosion detecting apparatus 70C according to the tenth embodiment includes the corrosion sensor 73 and a film degradation sensor 90, respectively, on four planes of the polyhedral supporting unit 72A of a rectangular structure, and the corrosion sensor 73 is also provided on a top surface thereof.

As the film degradation sensor 90, the corrosion detecting apparatus 10A as shown in Fig. 1 can be used. Accordingly, a corrosion current generated due to degradation of the film part of the structure can be detected and the presence of cracks can be confirmed.

Accordingly, progress of degradation of the coated film made of a material same as that of the actual coated film of an outdoor structure according to the orientation can be confirmed.

An example of measurement of the corrosive environment is explained next.
First, degradation of the coated film is monitored by the film degradation sensor 90, the corrosion condition is monitored by the corrosion sensor 73, and humidity is monitored by the hygrometer.

In each case of measurement, the current values (I₁, I₂) in each orientation of the corrosion sensor 73 and the film degradation sensor 90 are measured, and humidity at a time of measurement is also measured.

In each case of measurement, the current values (I₁, I₂) of the corrosion sensor 73 and the film degradation sensor 90 are measured, and the humidity at the time of measurement is also measured.

Fig. 6A is an example of measurement of the current value (I₁) of the corrosion sensor 73 (for example, measured for 120 days), and Fig. 6B is an example of measurement of the current value (I₂) of the film degradation sensor 90.

As shown in Fig. 6B, it is assumed that degradation of the coated film (a crack) is confirmed by the film degradation sensor 90 (the current value has abruptly increased (100th day)) during measurement in continuation of measurement.
In this case, an adhering condition of sea salt in an installation environment of the sensor, that is, a corrosive environment until the crack has occurred can be confirmed based on measurement results of the current value by the corrosion sensor 73 and the humidity measured in advance.
For example, the corrosive environment can be estimated by integrating or averaging the current value (I₁) obtained by the corrosion sensor 73 until the crack occurs.

Furthermore, in Fig. 5, the amount of adhered sea salt at the time of measurement can be confirmed by the humidity and the current value at that time.
That is, as to how much sea salt has been adhered can be determined based on the relation between a current value obtained by the corrosion sensor 73 and the humidity.
Accordingly, whether a measurement site (a specific orientation) is in a corrosion-prone environment can be determined.

When coating is applied again, measures for preventing future degradation of the coated film can be taken in the same manner described above.

### [Industrial Applicability]

As described above, according to the corrosion detecting apparatus and the outdoor structure of the present invention, the degradation degree of a coated film can be determined quickly, and the corrosion detecting apparatus and the outdoor structure are suitable for determination of degradation of components of, for example, a wind power station.

The corrosion detecting apparatus according to the present invention can keep the corrosion monitoring accuracy constant at all times, because the corrosion sensor can monitor corrosion in a new state at all times, and thus the corrosion detecting apparatus is suitable to be used for determination of degradation of components of, for example, a wind power station.

Further, according to the corrosion detecting apparatus and the outdoor structure of the present invention, the degradation degree can be determined quickly while taking the orientation of the structure into consideration, and the corrosion detecting apparatus and the outdoor structure are suitable to be used for determination of degradation of components of a wind power station, for example.

### [Explanations of Reference Letters of Numerals]

- 10A to 10C: corrosion detecting apparatus of coated film
- 11: first conductive part
- 12: film part
- 13: second conductive part
- 14: crack
- 15: water film
- 16: water permeable part
- 20: base material
- 21: coated film
- 30: hygrometer,
- 50A, 50B: corrosive-environment monitoring apparatus
- 51-0 to 51-3: corrosion sensor
- 52: degradation degree analyzer
- 53-1 to 53-3: storage container
- 55: controller
- 70A to 70C: corrosion detecting apparatus
- 71-1 to 71-8: substantially vertical plane
- 72A, 72B: polyhedral supporting unit
- 73: corrosion sensor
- 75: holding unit

## Claims

1. A corrosion detecting apparatus (10A; 10B; 10C) comprising:
a first conductive part (11) provided on an exterior surface of an outdoor structure;
an insulating film part (12) made of a material same as that applied to the outdoor structure, which covers the first conductive part (11); and
second conductive parts (13) provided on a coated film of the film part (12) with a predetermined gap therebetween, wherein
the corrosion detecting apparatus (10A; 10B; 10C) detects a corrosion current generated due to degradation of the film part (12).

2. The corrosion detecting apparatus (10A; 10B; 10C) according to claim 1, wherein the film part (12) is thinner than a coated film (21) applied to an outdoor structure.

3. An outdoor structure provided with the corrosion detecting apparatus (10A; 10B; 10C) according to claim 1 on a coated surface of an outdoor structure.

4. An outdoor structure, wherein
the corrosion detecting apparatus (10A; 10B; 10C) according to claim 1 is provided on a coated surface of an outdoor structure, and
a plurality of corrosion detecting apparatuses (10A;
10B; 10C) having a thickness of the film part (12) different from each other are provided.

5. An outdoor structure, wherein
the corrosion detecting apparatus (10A; 10B; 10C) according to claim 1 is provided on a coated surface of an outdoor structure, and
any one of an actinometer, a hygrometer, and a PH meter is provided near the corrosion detecting apparatus (10A; 10B; 10C).

6. An outdoor structure comprising: a base material of an outdoor structure used as a first conductive part (11); a coated film (21) of an outdoor structure that covers the base material; and second conductive parts (13) provided with a predetermined gap therebetween on top of the coated film (21), wherein a corrosion current is detected by degradation of the coated film (21).

7. An outdoor structure comprising:
a base material of an outdoor structure;
a first conductive part (11) provided on the base material via an insulating unit;
a coated film (21) of an outdoor structure that covers the base material; and
second conductive parts (13) provided with a predetermined gap therebetween on top of the coated film (21), wherein
a corrosion current is detected by degradation of the coated film (21).

8. A corrosive-environment monitoring apparatus comprising:
a corrosion sensor (51-0, 51-1, 51-2, 51-3) that monitors a corrosive environment;
a degradation degree analyzer (52) that measures a degradation degree of a corrosion sensor (51-0, 51-1, 51-2, 51-3) during monitoring;
a plurality of storage containers (53-1, 53-2, 53-3) that individually store an unused corrosion sensor (51-0, 51-1, 51-2, 51-3) in an inert atmosphere; and
a controller (55) that releases the storage container to control switching so that a corrosive environment is newly measured by the unused corrosion sensor (51-0, 51-1, 51-2, 51-3), according to a determination result of degradation degree by the degradation degree analyzer (52).

9. The corrosive-environment monitoring apparatus according to claim 8, wherein
detection information of a detection area on a surface of the corrosion sensor (51-0, 51-1, 51-2, 51-3) is divided in plural according to analysis by the degradation degree analyzer (52),
a degradation degree is determined for each divided areas, and
when it is determined that a predetermined degradation degree has been reached, the controller (55) performs switching so that measurement is newly performed by the unused corrosion sensor (51-0, 51-1, 51-2, 51-3).

10. A corrosive-environment monitoring apparatus comprising:
a corrosion sensor part including a corrosion sensor (51-0, 51-1, 51-2, 51-3) during monitoring that is monitoring corrosive environments at a plurality of locations individually, and an unused corrosion sensor (51-0, 51-1, 51-2, 51-3) stored in a storage container;
an imaging unit installed individually facing a corrosion sensor (51-0, 51-1, 51-2, 51-3) during monitoring in the corrosion sensor part to transmit image information to a degradation degree analyzer (52) that measures a degradation degree on a surface of the corrosion sensor (51-0, 51-1, 51-2, 51-3);
an electronic transmitting unit that transmits respective pieces of imaging information to the degradation degree analyzer (52);
a degradation degree analyzer (52) that determines a degradation degree of respective pieces of imaging information;
a controller (55) that individually releases the storage container at a plurality of locations to control switching so that the corrosive environment is measured by the unused corrosion sensor (51-0, 51-1, 51-2, 51-3), according to a determination result by the degradation degree analyzer (52); and
a shift controller that individually shifts the imaging unit to capture images of a corrosion sensor (51-0, 51-1, 51-2, 51-3) that newly performs measurement due to switching by the controller.

11. The corrosive-environment monitoring apparatus according to any one of claims 8 to 10, wherein
the degradation degree analyzer (52) is a color analyzer having color sensors of R (red), G (green), and B (blue), which determines that the corrosion sensor (51-0, 51-1, 51-2, 51-3) is degraded when a measurement result of PBG comes close to a color value of brown (R:, G:, B).

12. A corrosive-environment monitoring method comprising:
measuring a degradation degree of a corrosion sensor (51-0, 51-1, 51-2, 51-3) during monitoring of a corrosive environment by a degradation degree analyzer (52); and
releasing a storage container in which an unused corrosion sensor (51-0, 51-1, 51-2, 51-3) is stored according to a determination result of the degradation degree by the degradation degree analyzer (52), to newly measure a corrosive environment by the unused corrosion sensor (51-0, 51-1, 51-2, 51-3).

13. A corrosion detecting apparatus (10A; 10B; 10C) comprising:
a polyhedral supporting unit (72A, 72B) having at least four substantially vertical planes;
a corrosion sensor (51-0, 51-1, 51-2, 51-3) respectively provided on the substantially vertical planes of the polyhedral supporting unit (72A, 72B); and
a holding unit that holds the polyhedral supporting unit (72A, 72B) provided with the corrosion sensor (51-0, 51-1, 51-2, 51-3), while maintaining the polyhedral supporting unit (72A, 72B) in a predetermined orientation with respect to an outdoor structure.

14. The corrosion detecting apparatus (10A; 10B; 10C) according to claim 13, wherein the corrosion sensor (51-0, 51-1, 51-2, 51-3) includes a first conductive part (11) as a base material, insulating units provided on top of the first conductive part (11) with a predetermined gap therebetween, and second conductive parts (13) provided on top of the insulating units, so that a corrosion current is detected by an adhered salt content.

15. The corrosion detecting apparatus (10A; 10B; 10C) according to claim 13, wherein
a coated-film corrosion detector is provided at a same installation site as or a different installation site from that of the corrosion sensor (51-0, 51-1, 51-2, 51-3), and
the coated-film corrosion detector comprises: a first conductive part (11) provided on an exterior surface of an outdoor structure, an insulating film part (12) made of a material same as that applied to the outdoor structure, which covers the first conductive part (11), and second conductive parts (13) provided on a coated film of the film part (12) with a predetermined gap therebetween, so as to detect a corrosion current generated due to degradation of the film part (12).

16. An outdoor structure provided with the corrosion detecting apparatus (10A; 10B; 10C) according to any one of claims 13 to 15.

17. An outdoor structure provided with the corrosion detecting apparatus (10A; 10B; 10C) according to any one of claims 13 to 15, wherein
any one of an actinometer, a hygrometer, and a PH meter is provided near the corrosion detecting apparatus (10A; 10B; 10C).

18. A corrosion protection method of an outdoor structure, comprising:
holding the corrosion detecting apparatus (10A; 10B; 10C) according to any one of claims 13 to 15, while maintaining the corrosion detecting apparatus (10A; 10B; 10C) in a predetermined orientation with respect to an outdoor structure;
determining an amount of adhered sea salt until reaching corrosion by the corrosion detecting apparatus (10A; 10B; 10C); and
performing cleansing or drying of an outdoor structure according to a degraded condition corresponding to an orientation.
